# EUROPEAN PATENT SPECIFICATION

(11) **EP 3 139 686 B1**
(45) Date of publication and mention of the grant of the patent: **22.05.2019**
(21) Application number: 15786367.1
(22) Date of filing: 28.04.2015
(51) Int. Cl.: H04W 72/04

(54) **COMMUNICATION CONTROL DEVICE, RADIO TERMINAL, MEMORY CARD, INTEGRATED CIRCUIT, RADIO COMMUNICATION DEVICE, AND RADIO COMMUNICATION METHOD**
KOMMUNIKATIONSSTEUERUNGSVORRICHTUNG, FUNKENDGERÄT, SPEICHERKARTE, INTEGRIERTE SCHALTUNG, FUNKKOMMUNIKATIONSVORRICHTUNG UND FUNKKOMMUNIKATIONSVERFAHREN
DISPOSITIF DE COMMANDE DE COMMUNICATION, TERMINAL RADIO, CARTE MÉMOIRE, CIRCUIT INTÉGRÉ, DISPOSITIF DE RADIOCOMMUNICATION ET PROCÉDÉ DE RADIOCOMMUNICATION

(30) Priority: 28.04.2014 JP 2014092983
(43) Date of publication of application: 08.03.2017
(60) Divisional application: 19165523.2
(73) Proprietor: Kabushiki Kaisha Toshiba, Minato-ku Tokyo 105-8001 (JP)
(72) Inventor: NABETANI, Toshihisa, Tokyo 105-8001 (JP); MATSUO, Ryoko, Tokyo 105-8001 (JP); ADACHI, Tomoko, Tokyo 105-8001 (JP); AOKI, Tsuguhide, Tokyo 105-8001 (JP)
(74) Representative: Noble, Nicholas
(86) International application number: PCT/JP2015/062873
(87) International publication number: WO 2015/166959

(56) References cited:
- EP-A1- 3 068 183
- WO-A2-2012/015609
- US-A1- 2013 229 996
- US-A1- 2013 286 959
- JINYOUNG CHUN (LG ELECTRONICS): "UL MU transmission ; 11-13-1388-00-0hew-ul-mu-transmission", IEEE DRAFT; 11-13-1388-00-0HEW-UL-MU-TRANSMISSION, IEEE-SA MENTOR, PISCATAWAY, NJ USA, vol. 802.11 HEW, 11 November 2013 (2013-11-11), pages 1-18, XP068063405, [retrieved on 2013-11-11]
- GEORGIOS ORFANOS ET AL: "A Centralized MAC Protocol with QoS Support for Wireless LANs", IEEE INTERNATIONAL SYMPOSIUM ON PERSONAL, INDOOR AND MOBILE RADIO COMMUNICATIONS. PIMRC, IEEE; PI, XX, 1 September 2007 (2007-09-01), pages 1-5, XP031168598, ISBN: 978-1-4244-1143-6
- 'Consideration on UL-MU overheads', [Online] XP055234791 Retrieved from the Internet: <URL:https:// mentor.ieee.org/802.11/dcn/15/11-15-0064-00 - 00ax-consideration-on-ul-mu-overheads.pptx>

## Description

### FIELD

Embodiments described herein relate to a wireless controlling device, a wireless terminal, a memory card, an integrated circuit, a wireless communication device and a wireless communication method.

### BACKGROUND

It is considered to perform OFDMA (Orthogonal Frequency Division Multiple Access) communication which assigns a plurality of channels to a plurality of wireless terminals, and performs simultaneous transmission to the plurality of wireless terminals or simultaneous reception from the plurality of wireless terminals. Here, the OFDMA includes not only a method of assigning the channels to the plurality of wireless terminals by each channel, but also a method of assigning the channels thereto by each subcarrier. The plurality of channels that are used in the OFDMA communication may be all of the channels which are used for the wireless communication system, or may be a part of the plurality of channels.

When the OFDMA communication is performed, an access point needs to select a wireless terminal that becomes an object of the OFDMA and assign an appropriate channel to each of the wireless terminals, so as to enhance use efficiency of the plurality of channels, and to notify the respectively assigned channels to the selected wireless terminals (in the case of method of assigning channels by each channel). At this time, it is considered to transmit frames each independently to the selected wireless terminals, and thereby to notify the assigned channels to the wireless terminals. However, in this method, an overhead is large, and as the number of the wireless terminals to be selected increases, a time period before the OFDMA communication starts becomes long. In addition, there is a possibility that a difference becomes large between a situation of channels when the channels are assigned to the wireless terminals and a situation of the channels when the OFDMA communication starts, and there is a case where a desired communication quality cannot be obtained. The aforementioned fact holds true not only for the method of assigning the channels by each channel, but also for the method of assigning the channels by each subcarrier, similarly.
Non-Patent Literature 1: IEEE Std.802.11acTm-2013
Non-Patent Literature 2: IEEE Std 802.11Tm-2012

WO 2012/015609 A2 is directed to a wireless station, comprising a transceiver operable for communicating in a wireless network supporting Uplink Multi-User Multiple Input Multiple Output Medium Access Control.

Jinyoung Chun, IEEE-SA Mentor, Piscataway, NJ, USA, vol.802.11 HEW is directed to UL MU transmission.

US 2013/229996 is directed to a method and apparatus that may provide multi-user parallel channel access (MU-PCA) and/or single-user parallel channel access (SU-PCA) using transmit and/or receive with symmetrical bandwidth, in the downlink (DL), uplink (UL), or combined DL and UL. SU-PCA and MU-PCA may support unequal modulation and coding schemes (MCS) and unequal transmit power. Medium access control (MAC) layer, Physical layer (PHY), and mixed and PHY layer methods and procedures may support UL, DL and combined UL and DL SU-PCA and MU-PCA using transmit and/or receive with symmetrical bandwidth. MU-PCA and/or SU-PCA may also be supported by MAC and PHY layer designs and procedures for downlink, uplink and combined uplink and downlink using transmit/receive with asymmetrical bandwidth.

EP3068183 published14 September 2016 and claims a priority date of 7 November 2013 and is directed method and a device for transmitting a multiuser uplink in the wireless LAN are disclosed. A method for receiving each uplink frame from a plurality of STAs in the wireless LAN can comprise the steps of: transmitting, by an AP, a downlink PPDU to the plurality of STAs on an overlapping time resource; and receiving, by the AP, each uplink frame from each of the plurality of STAs on an overlapping time resource through each uplink transmission resource with respect to each of the plurality of STAs, as the response to the downlink PPDU.

### SUMMARY

The object of the present invention is achieved by the features of the appended independent claims.

According to one embodiment, a wireless communication device includes a transmitter configured to transmit a frame including first information, the first information including information to designate a plurality of wireless communication devices and information concerning resource blocks which have been assigned to the plurality of wireless communication devices for multiplexing communication.

### BRIEF DESCRIPTION OF THE DRAWINGS

FIG. 1 is a view showing a wireless communication system according to a first embodiment.
FIG. 2 is a view showing a first example of an operation sequence between an access point and each wireless terminal.
FIG. 3 is a view in which frames that the access point and each of the wireless terminals transmit are shown by each channel, in the operation example shown in FIG. 2.
FIG. 4 is a view showing an example of a format of a notification frame.
FIG. 4A is a view showing another example of a frame format of the notification frame.
FIG. 5 is a view showing a second example of the operation sequence between the access point and each of the wireless terminals.
FIG. 6 is a view in which frames that the access point and each of the wireless terminals transmit are shown by each channel, in the operation example shown in FIG. 5.
FIG. 7 is a view showing a third example of the operation sequence between the access point and each of the wireless terminals.
FIG. 8 is a view in which frames that the access point and each of the wireless terminals transmit are shown by each channel, in the operation example shown in FIG. 7.
FIG. 9 is a view showing a fourth example of the operation sequence between the access point and each of the wireless terminals.
FIG. 10 is a view in which frames that the access point and each of the wireless terminals transmit are shown by each channel, in the operation example shown in FIG. 9.
FIG. 11 is a functional block diagram of a wireless communication device that is mounted on the access point, according to the first embodiment.
FIG. 12 is a functional block diagram of the wireless communication device that is mounted on the wireless terminal, according to the first embodiment.
FIG. 13 is a flow chart of the operation of the access point, according to the first embodiment.
FIG. 14 is a flow chart of the operation of the wireless terminal, according to the first embodiment.
FIG. 15 is a view for describing the meaning that the channels are consecutive.
FIG. 16 is a view showing an example of a hardware configuration of a wireless communication device that is mounted on an access point, according to a third embodiment.
FIG. 17 is a view showing an example of a hardware configuration of a wireless communication device that is mounted on a wireless terminal, according to the third embodiment.
FIG. 18 is a perspective view of a wireless terminal according to a fourth embodiment.
FIG. 19 is a view showing a memory card according to the fourth embodiment.
FIG. 20 is a view showing one example of frame exchange in a contention period.
FIG. 21 is an explanatory view of OFDMA.

### DETAILED DESCRIPTION

Hereinafter, embodiments of the present invention will be described with reference to the drawings.

### (First embodiment)

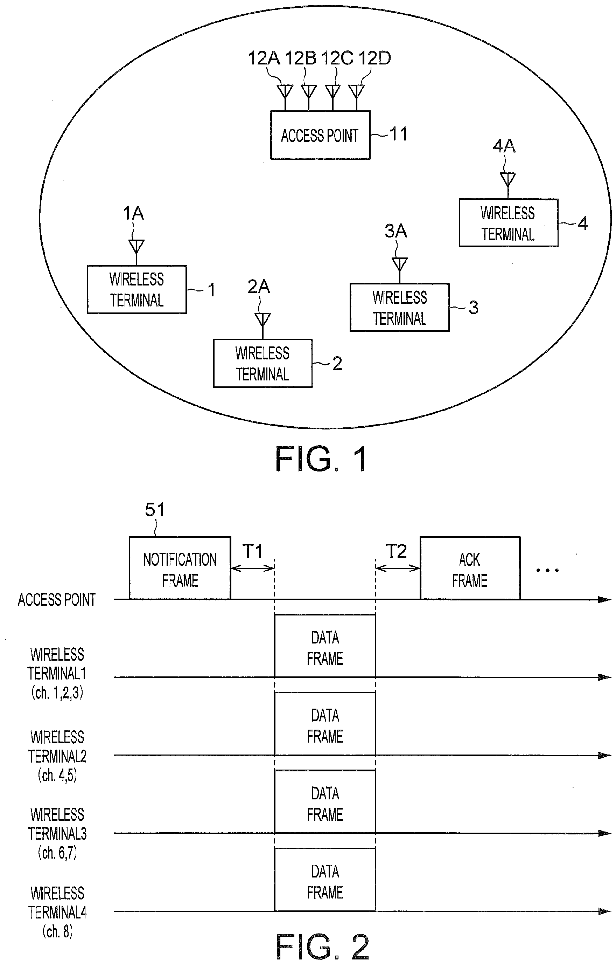

FIG. 1 shows a wireless communication system according to a first embodiment. This wireless communication system includes an access point (AP) 11 and wireless terminals (STA) 1, 2, 3 and 4, and executes communication according to the IEEE 802.11 standard. However, a communication scheme which the wireless communication system executes is not limited to this, but an arbitrary communication scheme can be executed as long as the present invention can be executed. The access point is also one form of the wireless terminals, and an access point 11 can be said to be a wireless terminal that has a function of the access point.

The access point 11 has one or more antennas. In the example of FIG. 1, the access point 11 has four antennas 12A, 12B, 12C and 12D. The wireless terminals 1 to 4 each have one or more antennas. In the example of FIG. 1, the wireless terminals 1 to 4 have each one antenna 1A, 2A, 3A and 4A, respectively. The wireless terminals 1 to 4 are connected to the access point 11 to form one wireless communication system or wireless communication group. The connection means a state in which a wireless link is established, and an exchange of a parameter that is necessary for communication is completed through an association process (transmission and reception of association request and association response, and the like) with the access point 11, and thereby the wireless link is established. Incidentally, in FIG. 1, the wireless terminals 1 to 4 are shown as the wireless terminals in which the wireless link has been established, but in addition to these, another wireless terminal may exist that has established the wireless link with the access point 11. In addition, the access point 11 may be further connected to another wired or wireless network, separately from the wireless network that is formed between the access point 11 and each of the wireless terminals. The access point 11 can relay communication between these networks and communication between the wireless terminals.

The access point 11 supports a plurality of frequency channels (hereinafter referred to as channel) in a predetermined frequency band, and performs OFDMA (Orthogonal Frequency Division Multiple Access) communication with the wireless terminals with the use of these channels. More specifically, the access point 11 assigns one or more different channels to each of the wireless terminals, and receives or transmits the frame from or to the plurality of wireless terminals with the use of these channels, at the same time. The transmission from the access point 11 to each of the wireless terminals is referred to as downlink transmission, and the transmission from each of the wireless terminals to the access point 11 is referred to as uplink transmission. In the present embodiment, there exist 8 channels from a channel 1 to a channel 8 in an ascending order of the frequency, as the plurality of channels in the predetermined frequency band. Reference numerals "1-8" in the channels 1 to 8 are channel numbers (i.e., channel Nos.). The details of the relationship among the eight channels will be described later.

Incidentally, the access point 11 does not need to simultaneously perform the OFDMA communication with all of the wireless terminals in the wireless communication group, but can select the wireless terminals with which the access point 11 performs the OFDMA communication, from the inside of the wireless communication group, and can perform the OFDMA communication with the selected wireless terminals. In addition, in the wireless communication group, the wireless terminal (legacy terminal) may exist which is not compliant with the OFDMA communication. In this case, the access point 11 may communicate with the legacy terminal in a conventional method. The OFDMA includes a method of assigning the subcarriers which are orthogonal to each other to each of the wireless terminals, and simultaneously performing the communication, but the present embodiment is directed to a channel-based OFDMA, not a subcarrier-based OFDMA. Such a channel-based OFDMA is hereinafter referred to as "MU-MC" (Multi-User Multi-Channel).

However, the present embodiment may be adapted even in the method of assigning the subcarriers to the plurality of terminals at a unit of subcarrier(s). Specifically, the OFDMA communication may be employed that assigns resource blocks (which may be referred to as subchannel, resource unit or frequency block as well) each of which has one or more subcarriers as one unit, to the terminals in a consecutive frequency domain (for instance, in 20 MHz channel width, 40 MHz channel width, 80 MHz channel width to 160 MHz channel width), respectively, and simultaneously transmits the resource blocks to the plurality of wireless terminals or simultaneously receives the resource blocks from the plurality of wireless terminals.

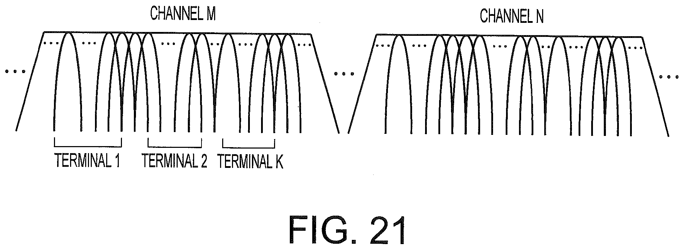

For example, as illustrated in FIG. 21, let it be assumed that a plurality of channels are allocated in a frequency domain and a band width of each channel is, for example, 20 MHz. The frequency domain of the band width of the one channel or a frequency domain of the band width bonding a plurality of consecutive channels corresponds to a consecutive frequency domain. In a consecutive frequency domain, a plurality of frequency-consecutive subcarriers are disposed so as to be orthogonal to each other. One or more resource blocks each including one or a plurality of consecutive subcarriers are assigned to each of the terminals. In the example of Fig. 21, resource blocks are assigned to the terminals 1, 2,...,K (K is two or more integer) in the frequency domain of one channel. By employing resource blocks respectively assigned to the terminals, simultaneous transmission to the plurality of terminals or simultaneous reception from the plurality of terminals is performed. Such OFDMA communication is especially referred to as "resource-block-based OFDMA communication". In this case, when a "channel" in an embodiment described below is replaced with the "resource block", subsequent embodiments can be similarly applied. In the example shown in Fig.21, two subcarriers are disposed as guard subcarriers between the resource blocks assigned to the terminals 1 and 2. The number of the guard subcarriers is not limited to two, and the number may be any number more than or equal to one. However, it is not always necessary to dispose the guard subcarrier(s) between the resource blocks assigned to the terminals, and it is also possible not to dispose the guard subcarrier(s) between the resource blocks assigned to the terminals. The number of subcarriers included in each resource block is basically same, but it may be allowed that the number of subcarriers may vary among each resource block. According to the width of the frequency domain to be used in the resource-block-based OFDMA communication, the band width of each subcarrier disposed in the frequency domain may vary. For example, when one channel (for example, 20MHz) is used in the resource-block-based OFDMA communication, the band width of each subcarrier included in the one channel may be narrower than that of each subcarrier disposed in the frequency domain of the band width of 40MHz bonding two consecutive channels. In a case where a resource block is configured by a plurality of subcarriers, the subcarriers may be disposed in a consecutive manner or may not be disposed in a consecutive manner. Also, one wireless terminal may be allocated a plurality of subcarriers disposed in a non-consecutive manner as a resource block.

Incidentally, it may be allowed that the subcarrier-unit scheme is performed in combination with MU-MC. For example, assignment in subcarrier units or resource block units to terminals is individually performed in each of the plurality of channels of 20 MHz. At this time, the number of subcarriers per one resource block is identical among each channel, but it may be allowed that the number of subcarriers of one resource block varies between channels. One or a plurality of resource blocks in one channel may be assigned to one terminal, or a plurality of resource blocks belonging to a plurality of channels may be assigned to one terminal.

Here, from the viewpoint of backward compatibility, it is required to allow the reception and decoding of PHY packets by at least a basic channel width (a channel width of 20 MHz when a terminal conforming to the IEEE802.11a/b/g/n/ac standards is assumed to be a legacy terminal) of a legacy terminal that is a subject of backward compatibility. Therefore, in a case where it is desired to acquire below-described network allocation vector (NAV) information on a resource block(s), NAV information may be acquired in channel units and NAV information on the channel may be commonly applied to resource blocks included in the channel.

Moreover, as stated above, in the case where the subcarrier-unit scheme is performed in combination with MU-MC, for instance, in the case where in each of a plurality of 20MHz channels, terminals are assigned subcarriers or resource blocks included in each channel, it may be allowed to expand an embodiment based on a channel in MU-MC as described below into an embodiment based on the combination of a channel and a resource block (or subcarrier).

The description will be continued below on the assumption that the OFDMA (MU-MC) is the channel base.

The wireless communication devices for communicating with each other are each mounted on the access point and the wireless terminal. The wireless communication device that is mounted on the access point is a communication device which the wireless communication device that is mounted on the wireless terminal targets for communication. The wireless communication device that is mounted on the access point 11 has a wireless communicator which transmits and receives signals, and a communication control device that controls communication with the plurality of wireless terminals 1 to 4 which are communication devices to be a plurality of targets, through the wireless communicator, and may further have antennas. The wireless communication device that is mounted on the wireless terminal is a communication device which the wireless communication device that is mounted on the access point targets for communication. The wireless communication device that is mounted on each of the wireless terminals has a wireless communicator which transmits and receives signals, and a communication control device that controls communication with the access point 11 which is a target communication device, through the wireless communicator, and may further have an antenna.

FIG. 2 shows a first example of an operation sequence between the access point 11 and the wireless terminals. Signals of frames which the access point 11 and the wireless terminals 1 to 4 transmit are shown by rectangles. A horizontal axis is a time axis, and the right side in FIG. 2 is a direction to which the time flows.

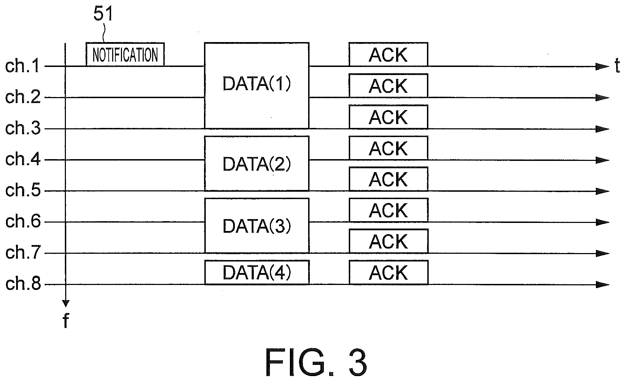

In addition, FIG. 3 is a view in which frames that the access point 11 and the wireless terminals transmit are shown by each channel. A figure in brackets denotes a reference number of the wireless terminal that is a transmission source, for the sake of convenience. For instance, "DATA (1)" is a data frame which the wireless terminal 1 transmits. A frame that does not have the number provided with parenthesis is a frame which the access point 11 transmits. "Notification" is a notification frame which will be described later, and "ACK" is an ACK frame. A horizontal axis is a time axis, and the right side in FIG. 2 is a direction to which the time flows.

An example of an operation between the access point 11 and the wireless terminals will be described below, with reference to FIG. 2 and FIG. 3. As a premise, the access point 11 has established wireless links with the plurality of wireless terminals containing the wireless terminals 1 to 4 beforehand. The case is assumed in which the wireless terminals 1 to 4 perform uplink transmission with the access point 11 through MU-MC.

Firstly, the access point 11 selects the plurality of wireless terminals to perform the MU-MC communication (uplink transmission), from among the plurality of wireless terminals in the wireless communication group, and also assigns the channels for simultaneously communicating with the plurality of wireless terminals, to each of the wireless terminals. Here, the access point 11 selects the wireless terminals 1, 2, 3 and 4, and has assigned the channels 1 to 3 to the wireless terminal 1, the channels 4 and 5 to the wireless terminal 2, the channels 6 and 7 to the wireless terminal 3, and the channel 8 to the wireless terminal 4. The access point 11 transmits a notification frame 51 including notification information that includes information which designates the selected wireless terminal and information concerning the channels which the access point 11 has assigned to each of the wireless terminals.

In selecting the wireless terminal, the access point 11 may select the wireless terminal from among the wireless terminals from which the access point 11 has received the request notification of the uplink transmission beforehand, or can randomly select the wireless terminal regardless of such a notification. In the latter case, when the data to be transmitted to the access point 11 does not exist, the wireless terminal may not transmit the data frame, even though having been selected as the target of the MU-MC communication. In addition, the access point 11 may select the wireless terminal by using information other than the request notification information of the uplink transmission from the terminal, or also can select the wireless terminal by using only the information which the access point 11 itself holds.

In addition, when assigning the channels to the selected wireless terminals, the access point 11 may receive the notification of the channel beforehand which each of the wireless terminals desires to use, and assign the channel from among the notified channels. The wireless terminal may specify the channel which the wireless terminal desires to use, by performing carrier sensing. In addition, the access point 11 may randomly determine the channels which are assigned to the wireless terminals. In addition, the access point 11 may determine the channel which is assigned to each of the wireless terminals, by using channel information of each terminal which the access point 11 itself holds. In addition, as for the number (i.e., quantity) of channels, the access point 11 may receive the request of the number of channels beforehand which are desired to be assigned, from the wireless terminals, and assign the channels equal to the number of channels which are required. In addition, it may also be possible that the plurality of wireless terminal groups are generated, and each of the groups performs the MU-MC communication at different timings. In this case, the channels may be assigned at a unit of the group.

The access point 11 transmits the notification frame 51 by broadcasting, as one example. However, the access point 11 may transmit the notification frame 51, by a method other than the broadcasting such as multicasting or unicasting. The access point 11 may transmit the notification frame 51 through a predetermined channel (for instance, channel 1), but also through the plurality of channels. The access point 11 may transmit the notification frame 51 through all of the channels as the plurality of above described channels, by Duplicate transmission. The Duplicate transmission means to transmit the same frame through each of the plurality of channels. At this time, the access point 11 performs the carrier sensing in all of the channels, and may transmit the notification frame 51 in all of the channels for which the transmission right could be acquired as being idling for a fixed period of time, by Duplicate transmission. In the case where the access point 11 transmits the notification frame 51 through the above described predetermined channel (for instance, channel 1), the access point 11 may notify the predetermined channel by an association response frame or the like, in an association process with the wireless terminal; may also notify the predetermined channel by a beacon frame that is periodically transmitted; or may separately define a management frame for notifying the previously predetermined channel, and notify the predetermined channel by the management frame beforehand. In addition, a channel for transmitting the notification frame 51 therethrough may not be fixed, but may be appropriately changed with the use of the beacon frame which is periodically transmitted, or the management frame for notifying the separately defined channel.

In the example of FIG. 3, the access point 11 transmits the notification frame 51 through the channel 1. The access point 11 performs the carrier sensing based on CSMA/CA before transmitting the notification frame 51, acquires the transmission right in the case of being idle based on the carrier sensing information, and transmits the notification frame 51. In the carrier sensing, there are physical carrier sensing and virtual carrier sensing, but in the present embodiment, the carrier sensing may include both of the carrier sensing. Incidentally, the management frame is a frame that is used for managing the communication links with other wireless terminals, and includes a beacon frame, an association request frame, an association response frame and the like, as one example. The control frame is a frame that is used for controlling the management frame and the data frame when the access point 11 transmits and receives (exchanges) the management frame and the data frame to and from another wireless communication device, and includes an RTS frame, a CTS frame, an ACK frame and the like, as one example. The notification frame may be classified into the management frame or the control frame as one example, or may also be classified into the data frame. The details of these data frame, management frame and control frame will be described in other embodiments which will be described later.

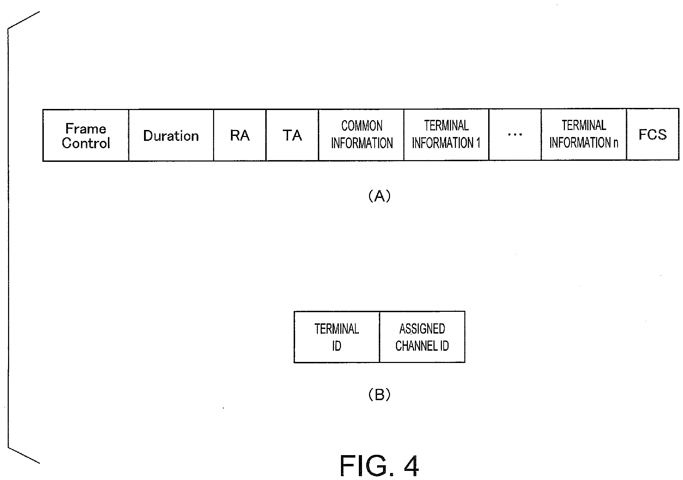

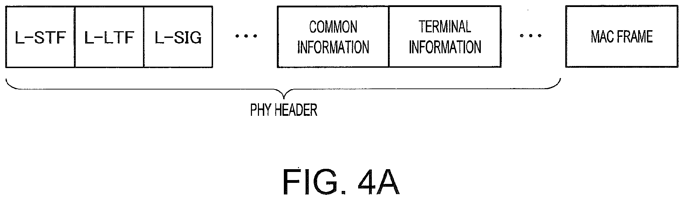

The carrier sensing will be described further in detail, and the carrier sensing includes both of the physical carrier sensing that is concerned with whether a medium (CCA) is busy or idle, and the virtual carrier sensing that is based on a medium reservation time period which is described in a reception frame. If one of the carrier sensing results indicates a busy state, the medium is considered to be a busy state, and transmission of the signal during the period is prohibited. Incidentally, in the IEEE 802.11 standard, the medium reservation time period is described in a Duration field (see FIG. 4(A) which will be described later) in a MAC header. The wireless communication device in the access point and the wireless terminals, when having received a frame to other wireless communication devices (not to itself), determines that the medium is virtually busy during the medium reservation time period. Such a mechanism as to determine that the medium is virtually busy, or a time period during which the medium is virtually busy is referred to as NAV (Network Allocation Vector).

FIG. 4(A) shows an example of a frame format of the notification frame 51. The notification frame 51 includes, for instance, a Frame Control field, a Duration field, an RA field, a TA field, a common information field, terminal information fields and an FCS field. Incidentally, the notification frame 51 may include other types of fields such as a Signal field and a synchronization field for synchronization, in addition to the illustrated fields. The Signal field can include, for instance, frame configuration information such as a whole length of the frame and an applied modulation scheme.

In the Frame Control field, the information is set that indicates the type of the frame and the like.

In the Duration field, the above described medium reservation time period in the virtual carrier sensing is set. A device that has received the frame in which the medium reservation time period is set in the Duration field counts down the medium reservation time period from the reception of the frame, and determines that the medium is virtually busy until the time period becomes 0.

In the RA (Receiver Address) field, usually, a MAC address of the transmission destination of the frame is set. The notification frame 51 is transmitted to the plurality of wireless terminals, and accordingly it is considered that a broadcast address or a multicasting address is set in the RA field. It is also possible to set a plurality of unicasting addresses. In this case, a plurality of RA fields may be provided and it may be defined in the Frame Control field that the plurality of unicasting addresses are set.

The TA (Transmitter Address) field includes the MAC address of the frame transmitting source. In the present embodiment, for instance, the MAC address of the access point is set.

The information to be commonly notified to the wireless terminals selected as a target for which the MU-MC communication is performed is set in the common information field as information necessary for the MU-MC communication to be performed. For instance, information on the type of the MU-MC communication may be set, which determines which of the uplink transmission or the downlink transmission is performed as the MU-MC communication. The access point 11 may set information that identifies all of the channels which the access point 11 has assigned to the wireless terminals. In addition, when the uplink transmission has been designated as the MU-MC communication, a condition may be set that relates to the size or time length of the frame which is uplink transmitted. The condition concerning the size or the time length may be, for instance, information indicating a value of a frame size or a data size (such as size of body portion of frame) that the wireless terminal transmits, or a range of values, (in which wireless terminal can return frame arbitrarily), of the frame size or the data size (size of body portion of frame) that the wireless terminal transmits. In addition, the information may be set that designates an access category of the data frame which is uplink transmitted. The access category may be one that is defined in the standard of IEEE 802.11 or may be one which is separately defined, for instance. In addition, in the common information field, the information may be set that indicates various fixed time periods (time period during which wireless terminal stands by before frame transmission) which will be described later. In addition, the information may be set there that indicates the number of terminal information fields which will be described later.

The terminal information field (individual information field) is provided for each of the wireless terminals which have been selected as the target of the MU-MC communication. The number of the terminal information fields coincides with the number of the wireless terminals that have been selected as the target of the MU-MC communication, and can vary according to the number of the wireless terminals. In the example of FIG. 2, four wireless terminals are selected, and accordingly the number of the terminal information fields is four. Specifically, a terminal information field 1, a terminal information field 2, a terminal information field 3 and a terminal information field 4 are provided.

The terminal information field includes identification information of the selected wireless terminal, and individual information that is peculiar to the wireless terminal, as information necessary for the MU-MC communication to be performed. The individual information includes the channel information that relates to the channel(s) which has been assigned to the wireless terminal. Examples of the channel information include identification information of the channel(s) which has been assigned to the wireless terminal. FIG. 4(B) shows an example in which a terminal ID and a channel ID (channel number which is referred to as "channel No.") are set in the terminal information field. Alternatively, it is also possible to set information on the number of the channels which have been assigned to the wireless terminal as the individual information (incidentally, a method of how the wireless terminal specifies channel that has been assigned to its own terminal, based on number of channels, will be described below). The configuration of the terminal information field described here is one example, and there can be various configurations as will be described later. The terminal ID may be the MAC address of the wireless terminal, or may use an identifier which is assigned for convenience from the access point 11 in the association process. In addition, when the access point 11 designates the access category of the data frame that each of the selected wireless terminals uplink transmits, each of the individual information may include the information which designates the access category.

It is also possible to set the identification information of each of the wireless terminals that the access point 11 has selected, not in each of the terminal information fields but in the common information field. In this case, in the common information field, the information may be set that indicates which wireless terminal uses which terminal information field. Such a rule may be determined that the terminal information fields each are used preferentially in order from the head side according to the order in which the identification information of the wireless terminals are sequenced. In this case, the information that which terminal information field is used by which terminal is unnecessary. The order in which the identification information of the wireless terminals are sequenced means information concerning the rank order of the wireless terminals.

In addition, the wireless terminals may be previously grouped and managed. In this case, the individual wireless terminals are not designated, but the group may also be designated. In this case, the identification information of the group may be set in the common information field or the terminal information field. In the common information field, the information may be set that indicates which wireless terminal uses which terminal information field. The access point 11 may notify beforehand which group its own terminal belongs to, to each of the wireless terminals, through the beacon frame, the association response frame or the separately defined management frame.

In the FCS (Frame Check Sequence) field, FCS information on the notification frame 51 is set. The FCS information is used in the receiver side for detecting an error in the frame body portion.

The terminal information fields and the common information field in the notification frame shown in FIG. 4 may be arranged in the MAC header of the MAC frame, or may be arranged in the frame body portion. Here, the case has been described in which the terminal information fields and the common information field are set in the MAC frame, but as is shown in FIG. 4A, the terminal information fields and the common information field may be set in a physical header (PHY header) which is added to the leading-edge side of the MAC frame. The PHY header includes L-STF (Legacy-Short Training Field), L-LTF (Legacy-Long Training Field), L-SIG (Legacy Signal Field), the common information field and the terminal information fields. The L-STF, the L-LTF and the L-SIG are fields which a legacy standard such as IEEE 802.11a, for instance, can recognize, and in which information on signal detection, frequency correction, a transmission speed and the like is stored. In the following description, the case is assumed in which the notification frame has a format as has been previously described in FIG. 4.

The wireless terminals 1 to 4 receive the notification frame 51 which has been transmitted from the access point 11, and analyze the common information field and the terminal information field in the notification frame 51. The wireless terminal determines whether or not the identification information of its own device is included in any one of the terminal information fields (or common information field) in the notification frame 51, and when the identification information of its own device is included therein, the wireless terminal detects that itself is selected as the target of the MU-MC communication. In addition, in this case, the wireless terminal detects the channel which has been assigned to its own terminal, from the terminal information field corresponding to its own terminal. The wireless terminal acquires other information necessary for MU-MC communication, from the common information field or the terminal information field, as needed. Thereby, each of the wireless terminals becomes possible to perform the MU-MC communication.

In the example of FIG. 2, the wireless terminals 1 to 4 which have received the notification frame 51 detect that the wireless terminals are selected as the targets of the MU-MC communication, respectively, and recognize that the channels 1 to 3, 4 to 5, 6 to 7 and 8 have been assigned to the wireless terminals, respectively. When having known that the notification frame 51 is transmitted through the predetermined channel (for instance, channel 1), the wireless terminal stands by for the notification frame 51 only in the channel, and if the wireless terminal has detected the channel(s) which has been assigned to its own terminal from the notification information included in the notification frame 51, the wireless terminal may switch the using channel or waiting channel to the assigned channel. In other words, the channel that notifies the notification frame therethrough and the channel that transmits and receives the data frame therethrough may be different from each other. In addition, the access point may determine not to use the channel which notifies the notification frame 51 therethrough, in the MU-MC communication with the wireless terminals, and may assign the channels to each of the wireless terminals, from among the channels other than the channel which notifies the notification frame 51 therethrough.

The wireless terminals 1 to 4 detect the channel(s) which has been assigned to its own terminal in the above described way, based on the reception of the notification frame 51, and also detect that the wireless terminals should transmit (uplink transmission) the data frame to the access point 11 after a fixed time period T1 after the completion of the reception of the notification frame 51. It may be determined beforehand as a system specification that the wireless terminals perform the uplink transmission after the fixed time period T1 after the completion of the reception of the notification frame 51, or such instruction information as to perform the uplink transmission of the data frame after the fixed time period T1 has elapsed after the reception of the notification frame 51 may be stored in the common information field.

Here, the fixed time period T1 may be an arbitrary value as long as being a predetermined fixed time period. As one example, a SIFS (Short Inter-frame Space) time (= 16 µs) can be used that is a time interval between frames, which is specified in a MAC protocol specification in IEEE 802.11 of wireless LAN. Alternatively, the value of the fixed time period T1 may be stored in the common information field, and the wireless terminals 1 to 4 may acquire the value of the fixed time period T1 from the common information field. In addition, the fixed time period T1 may be notified beforehand by another method such as the beacon frame or the other management frame.

As has been described above, the wireless terminals 1 to 4 that have received the notification frame 51 configures the setting of the wireless communicator so as to be capable of transmitting the data frame through the respectively assigned channels as needed, and after the fixed time period T1 after the reception of the notification frame 51, transmit the data frame through the respectively assigned channels. As shown in the example of FIG. 3, the wireless terminal 1 transmits the data frame through the channels 1 to 3, the wireless terminal 2 transmits the data frame through the channels 4 to 5, the wireless terminal 3 transmits the data frame through the channels 6 to 7, and the wireless terminal 4 transmits the data frame through the channel 8. Here, when transmitting the data frame, the wireless terminal combines the assigned channels into one frequency band, and transmits the data frame therethrough. However, a configuration is also possible in which the wireless terminal transmits the separate frames through respective channels. In addition, when information on a condition concerning a size or a time length which each of the terminals should transmit is set in the notification frame 51, the wireless terminal transmits the data frame according to the notified information. In addition, when the access category information that each of the terminals should transmit is set in the notification frame 51, the wireless terminal transmits the data frame of the corresponding access category according to the notified information. Incidentally, when having a plurality of antennas, the wireless terminal performs MIMO transmission, and thereby can also obtain effects of increasing the speed and becoming robust. Thus, the plurality of wireless terminals perform the uplink transmission of MU-MC, in other words, simultaneous transmission through the plurality of channels.

The access point 11 configures the setting of the wireless communicator as needed so as to be capable of receiving data frames through the channels through which the access point has notified each of the wireless terminals by the notification frame 51, and receives the data frame which is transmitted from each of the wireless terminals through the MU-MC communication scheme. Specifically, the access point 11 receives the data frame that is transmitted from the wireless terminal 1 through the channels 1 to 3, receives the data frame that is transmitted from the wireless terminal 2 through the channels 4 to 5, receives the data frame that is transmitted from the wireless terminal 3 through the channels 6 to 7, and receives the data frame which is transmitted from the wireless terminal 4 through the channel 8. When having successfully received the data frame that is transmitted from each of the wireless terminals, the access point 11 transmits the ACK frame to the wireless terminals 1 to 4 through the respective channels through which the access point has received the data frames, after the fixed time period T2 has elapsed after the reception of each of the data frames. This can be also said to be a kind of the MU-MC communication (MU-MC downlink transmission), because these ACK frames are simultaneously transmitted to the wireless terminals 1 to 4.

Here, as is shown in FIG. 3, the access point 11 transmits the ACK frames to the wireless terminal 1 through each of the channels 1 to 3, transmits the ACK frames to the wireless terminal 2 through each of the channels 4 to 5, transmits the ACK frames to the wireless terminal 3 through each of the channels 6 to 7, and transmits the ACK frame to the wireless terminal 4 through the channel 8. The access point 11 transmits (Duplicate transmission) the ACK frame having the same content, to the wireless terminal to which the plurality of channels have been assigned, through each of the channels. The access point 11 may determine one channel like a channel having the smallest number among the assigned channels beforehand, as the channel through which the access point transmits the ACK frame, and may return the ACK frame only through the channel. In addition, when transmitting the ACK frame, the access point 11 may not transmit the ACK frame by the Duplicate transmission through each of the channels, but may transmit the ACK frame through one frequency band in which the plurality of channels are combined, in the same manner as the received data frame. In addition, as for the transmission of the ACK frame, the access point 11 may not transmit different ACK frames to each of the wireless terminals by the MU-MC communication, as shown in FIG. 3, but may also transmit a common ACK frame being a frame that includes the ACK information to all of the wireless terminals. In this case, the access point 11 may transmit the common ACK frame that includes the ACK information to all of the wireless terminals through each of the channels by the Duplicate transmission, or may also transmit the common ACK frame by combining all of the channels.

Here, the fixed time period T2 may also be an arbitrary value as long as being a predetermined fixed time period. As one example, a SIFS (Short Inter-frame Space) time (= 16 µs) can be used that is a time interval between frames, which is specified in a MAC protocol specification in IEEE 802.11 of wireless LAN. The fixed time period T2 may have the same length as or a different length from that of the fixed time period T1. It may also be possible that the fixed time period T2 is stored in the common information field in the notification frame 51, and that the wireless terminals 1 to 4 are configured so as to be capable of detecting the value of the fixed time period T2 from the common information field. In addition, the fixed time period T2 may be notified beforehand by another method such as the beacon frame and the other management frame.

As has been described above, the access point 11 sets the channel information concerning the channel which each of the wireless terminals uses, in each of the terminal information fields of the notification frame 51. As an example of the channel information, as has been described above, such a method may be used as to explicitly notify the identification information (channel No.) of the channels which the access point 11 has assigned to each of the wireless terminals. At this time, the method may be one that lists all of the channel Nos. which have been assigned to the wireless terminals, or may be one that prepares, in the terminal information field, a bit string corresponding to the number of the channels (8 in the present embodiment) which the access point supports to set a bit corresponding to the assigned channel at 1 and set other bits at 0 (or vice versa), thereby notifying the channels which have been assigned to the wireless terminals. For instance, when the channels 1 to 3 are assigned to the wireless terminal 1, the bit string becomes "11100000". The leftmost bit is the 0th bit and the rightmost bit is the 7th bit, and the channels 1 to 8 are corresponded to the bits sequentially from the left. Alternatively, when the assigned channels are consecutive channels, the access point may notify a set of the minimum channel No. and the maximum channel No. For example, when assigning the channels 1 to 3, the access point may notify the minimum channel No. 1 and the maximum channel No. 3. In addition, the access point may also notify the minimum or maximum channel No., and the number of consecutive channels. For example, when assigning the channels 1 to 3, the access point may notify the minimum channel No. 1 (or the maximum channel No. 3) and the number 3 of consecutive channels. Also, when assigning the channels 1 to 3 and the channels 6 to 8, the access point may notify two sets of the set of the minimum channel No. 1 and the maximum channel No. 3 and the set of the minimum channel No. 6 and the maximum channel No. 8.

In addition to such a method of explicitly notifying the assigned channels, a suggestively notifying method is also possible. As the suggestive notification, there is a method of setting the number of the assigned channels to the wireless terminals as the channel information, in the terminal information field, and indirectly notifying the channel No. by the number of the assigned channels and the field number of the terminal information field. For instance, when the notified number of the channels is 3, the wireless terminal designated by the terminal information field 1 (in other words, wireless terminal in which identification information of its own device is set in terminal information field 1) recognizes that 3 channels (channels 1 to 3) from the channel of the minimum number are assigned. On the other hand, when the notified number of the channels is 2, the wireless terminal designated by the terminal information field 2 recognizes that 2 channels (channels 4 to 5) from the further next number are assigned. Here, the channel of the minimum number is set as a starting point, but it may also be possible to set the channel of the maximum number as a starting point, and sequentially assign the channels having the smaller number therefrom. The field number of the terminal information field is said to represent the rank of the wireless terminal, and the rank of the wireless terminal that is designated by the terminal information field 1 is 1, and the rank of the wireless terminal that is designated by the terminal information field 2 is 2. Such information on the rank may be explicitly described in the common information field. When having received such suggestive notification, the wireless terminal may specify the channel for its own terminal, based on the position of the field of its own terminal (rank of its own terminal) and the number of channels.

When all the channels which the access point has assigned to the wireless terminals continue from the channel of the minimum number or the maximum number, the access point can notify the channels by the above described method, but there can be also the case where the numbers of all the channels which the access point has assigned to the wireless terminals are skipped on the way like the channels 1 to 4 and the channels 7 to 8. In this case, the information may be described that identifies all of the channels which the access point 11 has assigned in the common information field, and only the channels described in the information may be set as targets to be assigned to the wireless terminals sequentially from the channel having the minimum number or the maximum number in the channels. In other words, all of the above described channels that are identified in the information have a predetermined rank order, are selected sequentially from the channel of the higher rank and are assigned to the respective wireless terminals. As a method of notifying all of the channels which the access point has assigned in the common information field, the method may be used that is similar to the method of explicitly notifying the channel in the above described terminal information field. Specifically, information (channel ID or the like) that identifies all of the channels may be listed, or the bit corresponding to all of the channels in the bit string may be set at 1 and other bits may be set at 0. When having received such suggestive notification, the wireless terminal may specify the channel according to the rank of its own terminal and the number of channels of its own terminal, from among the channels that are identified in the identification information.

Incidentally, as a method of setting the identification information of the wireless terminal in the terminal information field, it may be possible to describe the above described terminal ID (FIG. 4(B)), or to prepare a bit string that contains at least the number of the terminals, and set the bit corresponding to the wireless terminal which is a target at 1 and set other bits at 0.

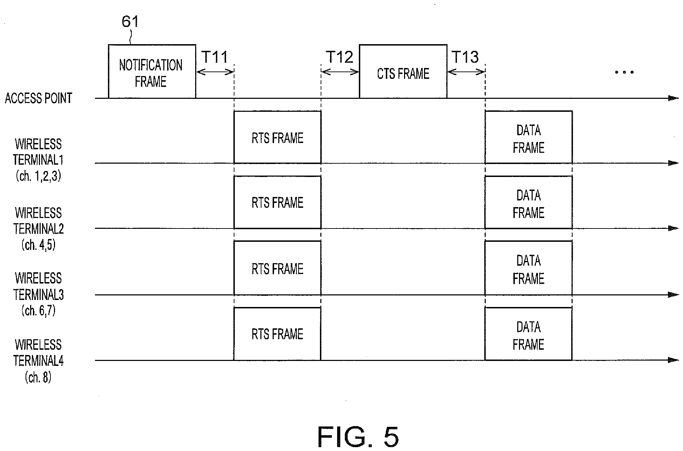

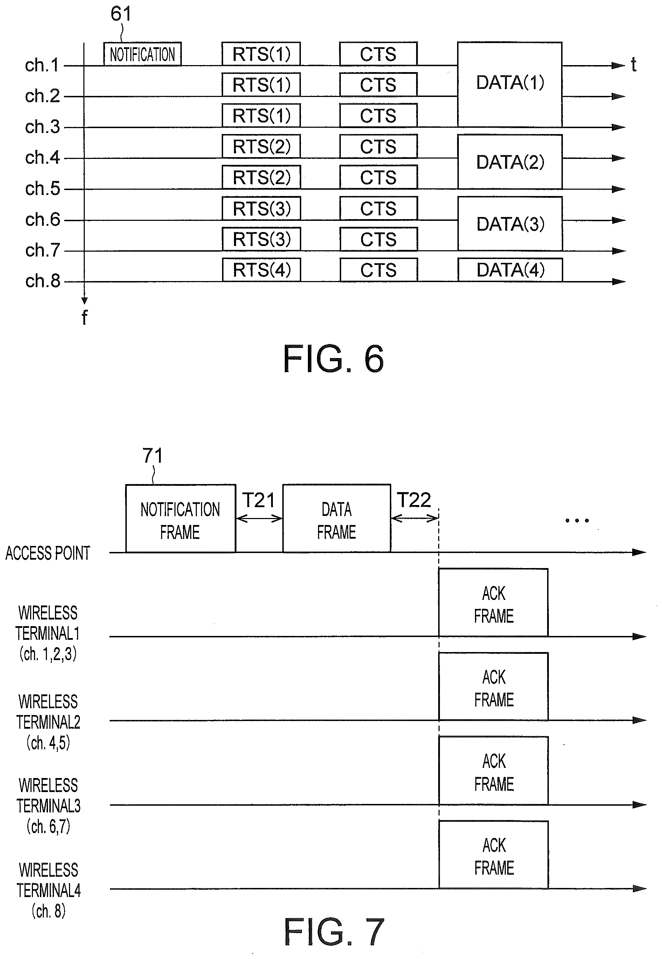

FIG. 5 shows a second example of the operation sequence between the access point 11 and the wireless terminals. FIG. 6 is a view in which frames that the access point 11 and the wireless terminals transmit are shown by each channel. Similarly to the previous description, the figure in brackets denotes a reference number of the wireless terminal that is the transmission source, for the sake of convenience. A frame that does not have the number provided with parenthesis is a frame which the access point 11 transmits. "RTS" represents an RTS frame, and "CTS" represents a CTS frame.

Hereafter, portions that are different from those in the operations described in FIG. 2 and FIG. 3 will be mainly described, and the description other than the portions will be omitted. Here as well, similarly to the case of FIG. 2 and FIG. 3, the case is assumed in which the wireless terminals 1 to 4 perform uplink transmission to the access point 11, by MU-MC. In addition, the channels 1 to 3, 4 to 5, 6 to 7 and 8 are assigned to the wireless terminals 1 to 4, respectively.

In the example of FIG. 2 and FIG. 3, each of the wireless terminals has uplink transmitted the data frame after the fixed time period T1 after the reception of the notification frame, but in the example of FIG. 5 and FIG. 6, each of the wireless terminals transmits an RTS frame or a control frame having an equivalent function to that of the RTS frame, after the fixed time period T11 after the completion of the reception of the notification frame 61. As is shown in FIG. 6, each of the wireless terminals transmits (Duplicate transmission) the RTS frame through the channel that has been assigned thereto, respectively. The access point 11 returns the CTS frame through a channel through which the access point 11 has been received the RTS frame, or which has been idle over fixed timings prior to the RTS frame, after a time period T12 after the completion of the reception of the RTS frame. The wireless terminal transmits the data frame by using the channel through which the CTS frame has been returned from the access point 11, after a time period T13 after the completion of the reception of the CTS frame. Here, in the case where in the exchange of the RTS frame and the CTS frame between the access point 11 and each of the wireless terminals, there has been a channel through which the frame has not been successfully received, the data frame is transmitted through channels except that channel. For instance, in the case where the access point 11 transmits the CTS frames to the wireless terminal 1 through the channels 1 to 3 by the Duplicate transmission in FIG. 6, and as a result the wireless terminal 1 has been incapable of having successfully received the CTS frame which is transmitted through the channel 1, the wireless terminal 1 transmits the data frame by using only the channel 2 and the channel 3 except for the channel 1. After that, when having successfully received the data frame, similarly to FIG. 2 and FIG. 3, the access point transmits the ACK frame, but the illustration is omitted here. Incidentally, in the example of FIG. 5, each of the wireless terminals has transmitted the RTS frame after the fixed time period T11 after the completion of the reception of the notification frame 61, but may perform the carrier sensing after the reception of the notification frame 61 at a trigger of the reception, and may transmit the RTS frame only through the channel that has been idle over the fixed time among the channels which are notified in the notification frame 61. In addition, the frame which each of the wireless terminals transmits after the fixed time period after the completion of the reception of the notification frame may be not only the data frame or the control frame, but also be the management frame.

Here, the fixed time periods T11, T12 and T13 may be arbitrary values as long as they are fixed predetermined time periods. As one example, a SIFS (Short Inter-frame Space) time (= 16 µs) can be used that is a time interval between frames, which is specified in a MAC protocol specification in IEEE 802.11 of wireless LAN. The fixed time periods T11 to T13 may have the same length or different lengths.

In the common information field of the notification frame 61, information (uplink transmission mode information) may be set, distinguishing between the uplink transmission of the data frame in the sequence of FIG. 2 and FIG. 3, and the uplink transmission of the data frame in the sequence of FIG. 5 and FIG. 6. In this case, each of the wireless terminals may determine by which sequence of FIG. 2 and FIG. 3 or of FIG. 5 and FIG. 6 each of the wireless terminals performs the uplink transmission of the data frame, according to the uplink transmission mode information. Here, the uplink transmission by the two methods has been described, but these methods are one example, and it is also possible to perform the uplink transmission by other methods (sequences) as long as the method is the one that performs the MU-MC uplink operation by regarding the transmission or reception of the notification frame as a trigger.

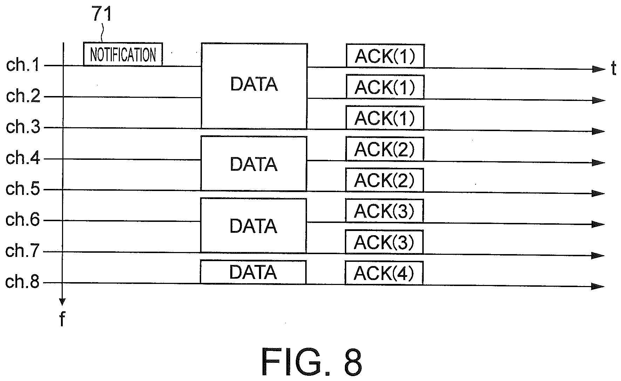

FIG. 7 shows a third example of the operation sequence between the access point 11 and the wireless terminals. FIG. 8 is a view in which frames that the access point 11 and the wireless terminals transmit are shown by each channel. Similarly to the previous description, the figure in brackets denotes a reference number of the wireless terminal that is the transmission source, for the sake of convenience. A frame that does not have the number provided with the parenthesis is a frame which the access point 11 transmits.

Hereafter, portions that are different from those in the operations described in FIG. 2 and FIG. 3 will be mainly described, and the description other than the portions will be omitted. The channels 1 to 3, 4 to 5, 6 to 7 and 8 are assigned to the wireless terminals 1 to 4, respectively.

In the example of FIG. 2 and FIG. 3, the wireless terminals 1 to 4 have performed the MU-MC uplink transmission with the access point 11, but it is assumed here that the access point 11 performs the MU-MC downlink transmission to the wireless terminals 1 to 4. The access point 11 transmits a notification frame 71, and transmits the data frame to each of the wireless terminals through the respectively assigned channels, after the fixed time period T21 after the completion of the transmission. As is shown in FIG. 8, the access point downlink transmits the data frame to the wireless terminal 1 through the channels 1 to 3, to the wireless terminal 2 through the channels 4 to 5, to the wireless terminal 3 through the channels 6 to 7, and to the wireless terminal 4 through the channel 8. In the common information field of the notification frame 71, the information may be set which indicates the downlink transmission as a type of the MU-MC communication. The information which indicates the downlink transmission corresponds to the notification that the data frame will be transmitted after the notification frame 71 has been transmitted. The frame that is transmitted after the notification frame has been transmitted is not limited to the data frame, but may be a control frame (which will be described later) or the management frame. In this case, the information which indicates the downlink transmission corresponds to the notification that the control frame or the management frame will be transmitted after the notification frame 71 has been transmitted.

Each of the wireless terminals sets the wireless communicator so as to be capable of receiving the data frame through the channel that has been assigned in the notification frame 71, as needed, successfully receives the data frame through the assigned channels respectively, which is transmitted from the access point 11 through the respective assigned channels, and transmits the ACK frame through the respective assigned channels after the fixed time period T22 after the completion of the reception. In more detail, as is shown in FIG. 8, the wireless terminal 1 transmits the ACK frame through each of the channels 1 to 3, the wireless terminal 2 transmits the ACK frame through each of the channels 4 to 5, the wireless terminal 3 transmits the ACK frame through each of the channels 6 to 7, and the wireless terminal 4 transmits the ACK frame through the channel 8. In the wireless terminals to which a plurality of channels have been assigned, the ACK frame having the same content is transmitted through the plurality of channels (Duplicate transmission). It may be possible to determine a rule beforehand to return the ACK frame through a channel that has the smallest number among the assigned channels, and return the ACK frame according to the rule. This rule may be set in the common channel information and be notified, may be determined beforehand as the system specification, or may be notified with the beacon frame.

Here, the fixed time periods T21 and T22 may be arbitrary values as long as they are predetermined fixed time periods. As one example, a SIFS (Short Inter-frame Space) time (= 16 µs) can be used that is a time interval between frames, which is specified in a MAC protocol specification in IEEE 802.11 of wireless LAN. The fixed time periods T21 and T22 may have the same length or different lengths.

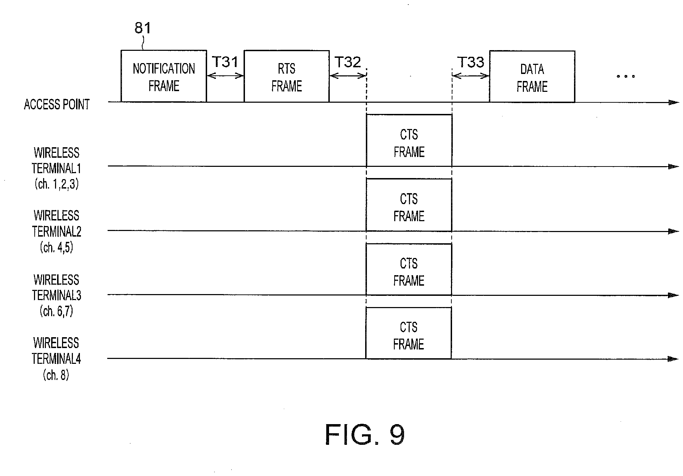

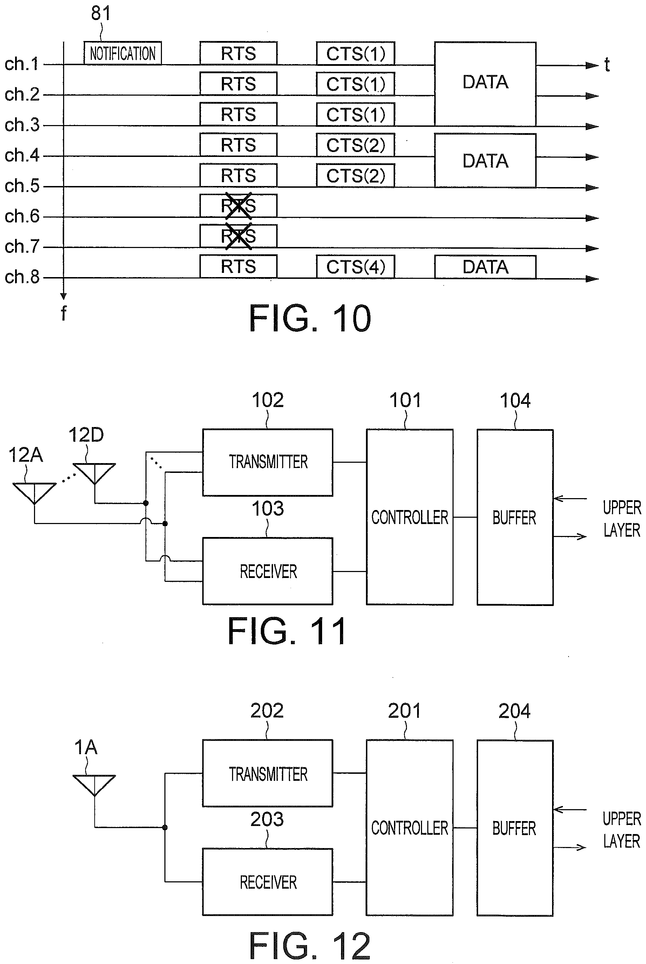

FIG. 9 shows a fourth example of the operation sequence between the access point 11 and the wireless terminals. FIG. 10 is a view in which frames that the access point 11 and the wireless terminals transmit are shown by each channel. Similarly to the previous description, the figure in brackets denotes a reference number of the wireless terminal that is the transmission source, for the sake of convenience. A frame that does not have the number provided with the parenthesis is a frame which the access point 11 transmits. "RTS" represents an RTS frame, and "CTS" represents a CTS frame.

Hereafter, portions that are different from those in the operations described in FIG. 7 and FIG. 8 will be mainly described, and the description other than the portions will be omitted. Here as well, similarly to the case of FIG. 7 and FIG. 8, the case is assumed in which the access point 11 performs the MU-MC downlink transmission with the wireless terminals 1 to 4. In addition, the channels 1 to 3, 4 to 5, 6 to 7 and 8 are assigned to the wireless terminals 1 to 4, respectively.

In the example of FIG. 7 and FIG. 8, the access point 11 has transmitted the data frame by the MU-MC downlink transmission after a fixed time period after the transmission of the notification frame, but in the example of FIG. 9 and FIG. 10, the access point 11 firstly transmits the RTS frame after a fixed time period T31 after the completion of the transmission of the notification frame 81. As is shown in FIG. 10, the access point transmits (Duplicate transmission) the RTS frame to each of the wireless terminals through the channel that has been assigned to each of the wireless terminals. Each of the wireless terminals returns the CTS frame through the channel which each of the wireless terminals has been capable of having received the RTS frame, or which has been idle over the fixed time previously to the RTS frame, after a fixed time period T32 (see FIG. 9) after the completion of the reception of the RTS frame. In the present example, it is assumed that the wireless terminal 3 has been incapable of having received the RTS frame through the assigned channels 6 and 7, or that the channels have not been idle over the fixed time previously to the RTS frame, and therefore the wireless terminal 3 does not transmit the CTS frame. The access point 11 transmits the data frame by using the channel through which each of the wireless terminals has returned the CTS frame, after a fixed time period T33 after the completion of the reception of the CTS frame. The CTS frame has not been returned through any of the channels 6 and 7 from the wireless terminal 3, and accordingly the access point does not transmit the data frame; but the CTS frames have been returned from the wireless terminals 1, 2 and 4 through all of the assigned channels, and accordingly the access point transmits the data frames to the wireless terminals 1, 2 and 4 by using all of the assigned channels, respectively. Incidentally, when the CTS frame has been returned through only a part of the channels among the assigned channels, the access point transmits the data frame through only the part of the channels. After that, when having successfully received the data frame from the access point 11, each of the wireless terminals transmits the ACK frame, similarly to the access point 11 in FIG. 7 and FIG. 8, but the illustration is omitted here. Incidentally, in the example of FIG. 9 and FIG. 10, the access point has transmitted the RTS frame after the fixed time period T31 after completion of the transmission of the notification frame 81, but the access point 11 may perform the carrier sensing after the transmission of the notification frame 81, and may transmit the RTS frame from only a channel(s) that has been idle.

Here, the fixed time periods T31, T32 and T33 may be arbitrary values as long as they are predetermined fixed time periods. As one example, a SIFS (Short Inter-frame Space) time (= 16 µs) can be used that is a time interval between frames, which is specified in a MAC protocol specification in IEEE 802.11 of wireless LAN. The fixed time periods T31, T32 and T33 may have the same length or different lengths.

In the common information field of the notification frame 81, information (downlink transmission mode information) may be set, for distinguishing between the downlink transmission of the data frame in the sequence of FIG. 7 and FIG. 8, and the downlink transmission of the data frame in the sequence of FIG. 9 and FIG. 10. Each of the wireless terminals may detect by which method of FIG. 7 and FIG. 8 or of FIG. 9 and FIG. 10 each of the wireless terminals performs the downlink transmission of the data frame, according to the downlink transmission mode information, and may perform a standby operation in the assigned channels. Here, two examples of the downlink transmission of the data frame have been described, but these examples are one example, and it is also possible to perform the downlink transmission of the data frame by other methods (sequences) as long as the method is the one that performs the MU-MC downlink transmission while regarding the transmission or reception of the notification frame as a trigger.

FIG. 11 is a functional block diagram of a wireless communication device of the access point 11. As has been described above, the access point 11 may be connected to a plurality of networks that includes a network in the wireless terminal side and a network which is separated from the network. FIG. 11 shows a configuration of the wireless communication device that is connected to the network in the wireless terminal side.

The wireless communication device includes a controller 101, a transmitter 102, a receiver 103, antennas 12A, 12B, 12C and 12D, and a buffer 104. The controller 101 corresponds to a communication control device which controls the communication with the wireless terminal; and the transmitter 102 and the receiver 103 form, as one example, a wireless communicator. All or a part of the processing of the controller 101 and the processing in a digital domain of the transmitter 102 and the receiver 103, or the processing of the communication control device may be performed by a software (program) which is operated by a processor such as a CPU, may also be performed by a hardware, or may also be performed by both of the software and the hardware. The access point may have a processor that performs all or a part of the processing of the controller 101, the transmitter 102 and the receiver 103, or the processing of the communication control device.

The buffer 104 is a memory for use in delivering a data frame, between an upper layer and the controller 101. The buffer 104 may be a volatile memory such as DRAM, or a nonvolatile memory such as NAND and MRAM. The upper layer stores a frame that the upper layer has received from another network in the buffer 104, for relaying the frame to the network in the wireless terminal side; and receives a frame that the controller 101 has received from the network in the wireless terminal side, from the controller 101, and delivers the data to the upper layer. The upper layer may also perform the communication processing for the upper order than the MAC layer such as TCP/IP and UDP/IP. In addition, the upper layer may also perform the processing for an application layer which processes data. The operation of the upper layer may be performed by processing of a software (program) by a processor such as a CPU, may be performed by a hardware, or may be performed by both of the software and the hardware.

The controller 101 mainly performs the processing of the MAC layer. The controller 101 manages the access of the channel, and controls the transmission of the frame at desired timing. The controller 101 transmits and receives a frame through the transmitter 102 and the receiver 103, and thereby controls the communication with each of the wireless terminals. In addition, the controller 101 may also control the transmitter to periodically transmit the beacon frame. The controller 101 may include a clock generator which generates a clock. In addition, the controller 101 may be configured so that the clock is input into the controller from the outside. The controller 101 may manage an internal time period by a clock which has been generated in the clock generator, or by the clock which is input from the outside. In addition, the controller 101 may output the clock that has been generated in the clock generator, to the outside such as a host CPU.

The controller 101 receives an association request from the wireless terminal, and establishes a wireless link with the wireless terminal, through a process such as authentication, as needed. The controller 101 manages the wireless terminal which has established the wireless link. The controller 101 determines to perform the MU-MC communication according to an arbitrary trigger, and generates a notification frame. The controller 101 selects the wireless terminal with which the controller performs the MU-MC communication, and assigns the channel to the selected wireless terminal. The controller 101 sets necessary information as have been described above, in the common information field and the terminal information field of the notification frame, based on the selected wireless terminal, the assigned channel and the like. The controller 101 sets the information that is common among all of the selected wireless terminals, in the common information field, and thereby can reduce the amount of the information of the notification frame. One or more groups of the wireless terminals which perform the MU-MC communication may be generated beforehand to assign channels to the wireless terminals by each group in advance. In this case, the controller 101 may select the group according to a trigger which has determined the start of the MU-MC communication.

The trigger of the MU-MC communication may be any trigger, and for instance, when having checked that there are data to be transmitted to one or the plurality of wireless terminals in the buffer 104, the controller 101 may determine to perform the MU-MC downlink transmission. In addition, the controller 101 may determine to perform the MU-MC transmission, when there has been a request from the wireless terminal, or at a constant time interval. The controller 101 transmits the notification frame which has been generated based on the determination of the MU-MC communication, from the transmitter 102, by using the predetermined channel, according to a communication scheme to be used. As one example, the controller 101 performs the carrier sensing, and when having been capable of acquiring the transmission right, outputs the notification frame to the transmitter 102. In addition, in the case of the MU-MC downlink transmission shown in FIG. 7 or FIG. 9, the controller 101 transmits the data frame or the RTS frame to each of the wireless terminals through the respective assigned channel(s), after a fixed time period after the completion of the transmission of the notification frame. The controller 101 controls the transmitter 102 so as to be capable of transmitting the data frame or the RTS frame through the respective assigned channels, as needed. In addition, the controller 101 controls the receiver 103 so as to be capable of receiving each of the frames that are transmitted from each of the wireless terminals, through the channel which the controller has notified in the notification frame, as needed.

The transmitter 102 subjects the frame which is input from the controller 101, to desired processing for a physical layer such as modulation processing and an addition of a physical header. In addition, the transmitter 102 subjects the processed frame of the physical layer, to DA conversion, filter processing of extracting a signal component in a desired frequency band, and frequency conversion. The transmitter 102 amplifies a signal of which the frequency has been converted, and radiates the amplified signal from one antenna or the plurality of antennas to the space as a radio wave. Incidentally, in the example shown in the figure, one transmitter is provided, but it may also be possible to arrange one transmitter for each of the channels and use the corresponding transmitter. At this time, one antenna may be connected for each of the transmitters. Alternatively, one transmitter may be arranged for the plurality of channels.

A signal that is received by each of the antennas is amplified in the receiver 103, the frequency of the signal is converted (down-converted), and the resultant signal is subjected to filter processing. For instance, the reception signal in each of the channels is extracted in the filter processing. Alternatively, when the data frame is transmitted from the wireless terminals (MU-MC uplink transmission) in a band width that is a combined width of the assigned channels, the signal is extracted in the band width of the combined width of those channels. At this time, it is also possible to obtain the signals in the combined band width, by combining the reception signal that has been extracted from each of the channels. Each of thus obtained reception signals is converted into a digital signal through A/D conversion, is subjected to the processing for the physical layer such as demodulation and decoding, and then is input to the controller 101 as a frame. Incidentally, the signal in each of the channels or the signals in the combined band width may be subjected to the A/D conversion, and then the digital signals may be extracted in the digital domain in the controller 101. Incidentally, one receiver is provided in the illustrated example, but the receiver may be arranged in each of the channels, and one antenna may be connected for each of the receivers. Alternatively, one receiver may be arranged for the plurality of channels.

When the input frame is the RTS frame transmitted from the wireless terminal, the controller 101 controls the transmitter so as to transmit the CTS frame through a channel through which the access point has been capable of receiving the RTS frame, or through a channel which has been idle for the fixed time period before the reception of the RTS frame as a result of the carrier sensing. In addition, when the access point has successfully received the data frame from the wireless terminal, the controller controls the transmitter so as to transmit the ACK frame after a fixed time period after the completion of the reception of the data frame. In addition, the controller 101 manages carrier sensing information through the receiver 103. This carrier sensing information may include both of physical carrier sensing information concerning busy or idle of a medium (CCA) input from the receiver 103 , and virtual carrier sensing information based on a medium reservation time period described in a reception frame. If one of the carrier sensing information indicates a busy state, the medium is regarded as the busy state, and the transmission of the signal during the period is prohibited.

The controller 101 may access a storage device for storing information that is transmitted to each of the wireless terminals or information that the access point has received from each of the wireless terminals, and may read out the information. The storage device may be an internal memory or an external memory, and may be a volatile memory or a nonvolatile memory. In addition, the storage device may also be an SSD, a hard disk or the like, in addition to the memories.

The isolation between the above described processes of the controller 101 and the transmitter 102 is one example, and another form is also possible. For instance, the processing up to the one in the digital domain may be performed in the controller 101, and the processing after the DA conversion may be performed in the transmitter 102. The isolation between the processes of the controller 101 and the receiver 103 is also similar; and the processing up to the AD conversion may be performed in the receiver 103, and the subsequent processing in the digital domain, which includes the processing for the physical layer, may be performed in the controller 101. The isolation between the processes may also be performed in a method other than the method described here.

FIG. 12 is a functional block diagram of the wireless communication device that is mounted on the wireless terminal 1. The wireless communication devices that are mounted on the wireless terminals 2 to 4 have similar configurations to that of the wireless communication device of the wireless terminal 1, and accordingly the description will be omitted.

The wireless communication device includes a controller 201, a transmitter 202, a receiver 203, an antenna 1A and a buffer 204. The controller 201 corresponds to a communication control device which controls the communication with the access point 11; and the transmitter 202 and the receiver 203 form, as one example, a wireless communicator. All or a part of the processing of the controller 201 and the processing in a digital domain of the transmitter 202 and the receiver 203, or the processing of the communication control device may be performed by a software (program) which is operated by a processor such as a CPU, may also be performed by a hardware, or may also be performed by both of these software and hardware. The wireless terminal may have a processor that performs all or a part of the processing of the controller 201, the transmitter 202 and the receiver 203, or the processing of the communication control device.

The buffer 204 is a memory for use in delivering a data frame, between an upper layer and the controller 201. The buffer 204 may be a volatile memory such as DRAM, and a nonvolatile memory such as NAND and MRAM. The upper layer generates data which are transmitted to the other wireless terminals, the access point 11, or a device such as a server; stores the generated data in the buffer 204 for transmitting the data; receives the data of the frame which the upper layer has received from the access point 11, through the buffer 204; and processes the received data. The upper layer may also perform the communication processing for the upper order than the MAC layer such as TCP/IP and UDP/IP. In addition, the upper layer may also perform the processing for an application layer which processes data. The processing for the upper layer may be performed by a software (program) which is operated by a processor such as a CPU, may also be performed by a hardware, or may also be performed by both of these software and hardware.

The controller 201 mainly performs the processing of the MAC layer. The controller 201 manages the access of the channel, and controls the transmission of the frame at desired timing. The controller 201 transmits and receives a frame to and from the access point 11, through the transmitter 202 and the receiver 203, and thereby controls the communication with the access point 11. The controller 201 receives, for instance, the beacon frame that is periodically transmitted from the access point 11, through the antenna 1A and the receiver 203. The controller 201 may include a clock generator which generates a clock. In addition, the controller 201 may be configured so that the clock is input into the controller from the outside. The controller 201 may manage an internal time period through a clock which has been generated in the clock generator, or by the clock which is input from the outside. In addition, the controller 201 may output the clock that has been generated in the clock generator, to the outside such as a host CPU.

When connecting the wireless terminal to the access point 11, the controller 201 transmits an association request to the access point 11, receives the association response through a process such as authentication, as needed, and thereby establishes a wireless link with the access point 11. The controller 201 checks the buffer 204 periodically or by a trigger from the outside. The controller 201 controls the transmitter 202 and the receiver 203 so that when the receiver 203 has received the notification frame which is transmitted from the access point 11, and the controller 201 has detected that its own terminal has been designated as the target of the MU-MC communication through the common information field or the terminal information field in the notification frame, the controller 201 identifies the channel which has been assigned to its own terminal, through the terminal information field, and the transmitter 202 performs MU-MC communication by using the identified channel. For instance, in the case of the MU-MC uplink transmission, the transmitter 202 transmits the data frame through the channel which has been assigned to its own terminal, after a fixed time period after the reception of the notification frame (see FIG. 2). Alternatively, the controller 201 transmits the RTS frame through each of the channels that have been assigned to its own terminal, after a fixed time period after the reception of the notification frame (see FIG. 5). It may be set in the common information field which of the operations in FIG. 2 and FIG. 5 is performed, as the uplink transmission mode information, or may also be predetermined as a system specification. Here, when the condition concerning the size or the time length of the data frame to be transmitted is specified in the common information field or the terminal information field, the controller follows the condition. Alternatively, the condition concerning the size or the time length may be specified in the system specification, the notification by the beacon frame, and the like, beforehand. Incidentally, when the data that is transmitted to the access point 11 does not exist, the wireless terminal does not need to transmit the data frame. When the notification frame is transmitted through a specific channel, the controller 201 may control the transmitter 202 and the receiver 203 so that the receiver 203 stands by for the notification frame in the specific channel, and after the reception of the notification frame, the transmitter 202 switches the using channel or the waiting channel to the assigned channel which has been designated in the notification frame.

The controller 201 performs control so as to transmit the frame to be transmitted through the transmitter 202 and the antenna 1A, according to the channel to be used and the communication scheme. The transmitter 202 subjects the frame that is input from the controller 201, to desired processing for the physical layer, such as modulation processing and an addition of a physical header. In addition, the transmitter 202 subjects the processed frame of the physical layer, to DA conversion, filter processing of extracting a signal component in a desired frequency band, and frequency conversion (upconversion). The transmitter 202 amplifies a signal of which the frequency has been converted, and radiates the amplified signal from the antenna to the space as a radio wave. Incidentally, in the example shown in the figure, one transmitter is provided, but it may also be possible to arrange one transmitter for each of the channels and use the corresponding transmitter. At this time, one antenna may be connected for each of the transmitters. Alternatively, one transmitter may be arranged for the plurality of channels.

A signal that is received by the antenna 1A is amplified in the receiver 203, the frequency of the signal is converted (down-converted), and the resultant signal is subjected to filter processing. For instance, the reception signal through a desired channel or each of the channels is extracted. Alternatively, when the data frame is transmitted (MU-MC downlink transmission) in a band width that is a combined width of the channels which have been assigned by the access point 11, the signal is extracted in the band width of the combined width of those channels. Alternatively, at this time, it is also possible to obtain the signals in the combined band width, by combining the reception signals that have been extracted from each of the channels. The reception signals are further converted into digital signals through A/D conversion, are subjected to the processing for the physical layer such as demodulation and decoding, and then are input to the controller 201 as a frame. Incidentally, the signal in a desired channel, the signal in each of the channels or the signals in the combined band width may be subjected to the A/D conversion, and then the digital signals may be extracted in the digital domain in the controller 201. Incidentally, one receiver is provided in the illustrated example, but the receiver may be arranged in each of the channels, and one antenna may be connected for each of the receivers. Alternatively, one receiver may be arranged for the plurality of channels.

When having received the notification frame from the access point 11, the controller 201 checks whether its own terminal is selected as a target of the MU-MC communication, as having been described above, and when its own terminal is selected, performs processing concerning the MU-MC communication by using the channel that has been assigned to its own terminal. For instance, after having received the notification frame from the access point, the controller 201 transmits the RTS frame, and after that, when having received the CTS frame from the access point 11, transmits the data frame by using the channel through which the controller has received the CTS frame (see FIG. 5). In addition, the controller 201 receives the notification frame from the access point 11, subsequently receives the data frame by MU-MC, and transmits the ACK frame (see FIG. 7). In addition, when having received the RTS frame after the reception of the notification frame from the access point 11, the controller 201 transmits the CTS frame through the channel through which the controller has received the RTS frame or through the channel which has been idle for a fixed time period before the reception of the RTS frame, and after that, receives the data frame by the MU-MC (see FIG. 9).

The controller 201 may access a storage device for storing information that is transmitted to the access point 11 or information that the controller has received from the access point 11, and may read out the information. The storage device may be an internal memory or an external memory, and may be a volatile memory or a nonvolatile memory. In addition, the storage device may also be an SSD, a hard disk or the like, in addition to the memories.

The isolation between the above described processes of the controller 201 and the transmitter 202 is one example, and another form is also possible. For instance, the processing up to the one in the digital domain may be performed in the controller 201, and the processing after the DA conversion may be performed in the transmitter 202. The isolation between the processes of the controller 201 and the receiver 203 is also similar; and the processing up to the AD conversion may be performed in the receiver 203, and the subsequent processing in the digital domain, which includes the processing for the physical layer, may be performed in the controller 201. Another way of dividing the processes than the method described here is also possible.

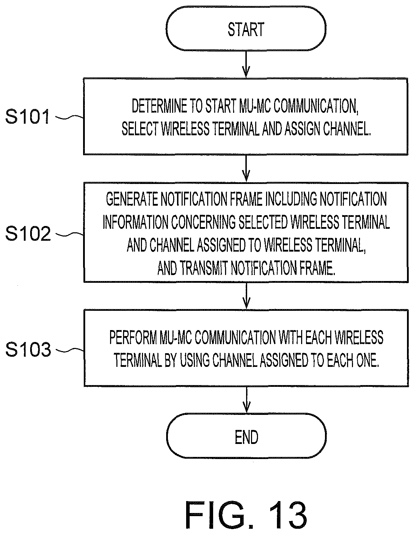

FIG. 13 is a flow chart showing the operation of the access point according to the present embodiment.

The access point 11 determines to execute the MU-MC communication, selects the wireless terminals which become a target, and assigns a channel(s) to each of the selected wireless terminals (S101). As for the assignment of the channel, the access point assigns one or more channels to each of the selected wireless terminal. As for one example, when assigning the plurality of channels to the wireless terminal, the access point 11 selects consecutive channels.

The access point 11 generates a notification frame which includes the notification information concerning the selected wireless terminals and the channels which has been assigned to the wireless terminals, and transmits the notification frame to each of the wireless terminals (S102). The notification frame may include information concerning either the MU-MC uplink transmission or the MU-MC downlink transmission as a communication type. In addition, it may also be adopted as a method of identifying which of the MU-MC uplink transmission and the MU-MC downlink transmission as the communication type, to define other notification frames as a notification frame for MU-MC uplink transmission and a notification frame for MU-MC downlink transmission, instead of notifying the communication type in the common information field of the notification frame. For instance, it is possible to define the frame type in the Frame Control field in FIG. 4(A). In addition, in the case of the uplink transmission, the notification frame may include uplink transmission mode information that distinguishes whether the transmission mode is the one (which transmits data frame after fixed time period after completion of reception of notification frame) in FIG. 2, or the one (which transmits RTS frame after fixed time period after completion of reception of notification frame) in FIG. 5. In addition, in the case of the downlink transmission, the notification frame may include downlink transmission mode information that distinguishes whether the transmission mode is the one (which transmits data frame after fixed time period has elapsed after completion of transmission of notification frame) in FIG. 7, or the one (which transmits RTS frame after fixed time period has elapsed after completion of transmission of notification frame) in FIG. 9. In addition, information concerning the number of the channels which the access point 11 has assigned to each of the wireless terminals may be stored in the terminal information field or the common information field. Alternatively, information that identifies all of the channels which the access point 11 has assigned to each of the wireless terminals may be stored in the common information field. The other information which has been described above may be stored in the common information field or the terminal information field.

After having transmitted the notification frame, the access point 11 performs the MU-MC communication with each of the wireless terminals by using the channels which the access point 11 has assigned to each of the wireless terminals (S103). In the operation example shown in FIG. 2, after a fixed time period T1 has elapsed after the reception of the notification frame, the access point 11 simultaneously receives the data frame (MU-MC uplink transmission) from each of the wireless terminals. In the operation example shown in FIG. 5, the access point 11 transmits the notification frame, then receives the RTS frame from each of the wireless terminals, transmits the CTS frame to each of the wireless terminals in response to the RTS frame, and then, after a fixed time period T13 has elapsed, simultaneously receives the data frame (MU-MC uplink transmission) from each of the wireless terminals. In the operation example shown in FIG. 7, after a fixed time period T21 has elapsed after the transmission of the notification frame, the access point 11 transmits the data frame (MU-MC downlink transmission) to each of the wireless terminals. In the operation example shown in FIG. 9, the access point 11 transmits the notification frame, then transmits the RTS frame to each of the wireless terminals, receives the CTS frame from each of the wireless terminals in response to the RTS frame, and then, after a fixed time period T33 has elapsed, transmits the data frame (MU-MC downlink transmission) to each of the wireless terminals.

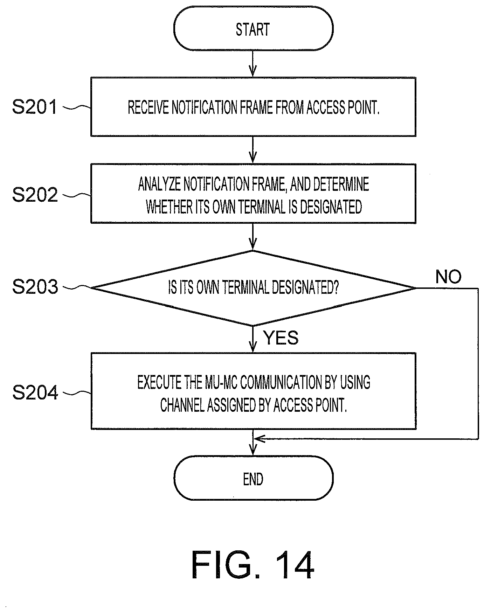

FIG. 14 is a flow chart showing the operation of the wireless terminal according to the present embodiment.

The wireless terminal receives the notification frame that includes the notification information including information which designates the selected wireless terminals and information concerning the channel(s) that has been assigned to each of the selected wireless terminal, from the access point 11 (S201).

The wireless terminal analyzes the frame which the wireless terminal has received from the access point 11, and thereby determines whether its own terminal is specified (S202). When its own terminal is not specified (No in S203), the present processing ends. When its own terminal is specified (Yes in S203), the wireless terminal identifies the channel(s) which has been assigned to its own terminal, according to the notification information included in the frame, and performs the MU-MC communication with the access point 11, simultaneously with other wireless terminals (S204). The access point 11 performs the MU-MC communication with the wireless terminals by using the channels which the access point 11 has assigned to the wireless terminals.

For instance, as in the operation example shown in FIG. 2, after a fixed time period T1 has elapsed after the reception of the notification frame, the wireless terminal transmits the data frame (MU-MC uplink transmission). Alternatively, as in the operation example shown in FIG. 5, after a fixed time period T11 has elapsed after the reception of the notification frame, the wireless terminal transmits the RTS frame. If having received the CTS frame from the access point in response to the RTS frame, after a fixed time period T13 has elapsed, the wireless terminal transmits the data frame (MU-MC uplink transmission). Alternatively, as in the operation example shown in FIG. 7, after a fixed time period T21 has elapsed after the completion of the transmission of the notification frame, the access point transmits the data frame (MU-MC downlink transmission) to each of the wireless terminals, and accordingly the wireless terminal stands by for the data frame in the channel assigned to its own terminal. In addition, as in the operation example shown in FIG. 9, the access point transmits the RTS frame to each of the wireless terminals, after a fixed time period T31 has elapsed after the completion of the transmission of the notification frame, and accordingly each of the wireless terminals stands by for the RTS frame in the channel assigned to its own terminal. After having received the RTS frame, the wireless terminal transmits the CTS frame in response to the RTS frame, and stands by for the data frame which will be transmitted from the access point 11 after the fixed time period T33 has elapsed. The information on which of the operations in FIG. 2, FIG. 5, FIG. 7 and FIG. 9 will be performed may be described in the notification frame, and the wireless terminal may operate according to the information; or when it is determined which of the operations will be performed in the system specification beforehand, the information does not need to be described in the notification frame.

As has been described above, according to the first embodiment, it is possible to efficiently perform the notification of the wireless terminal which becomes the MU-MC target and the notification of the channel which has been assigned to the wireless terminal, by transmitting the notification frame that includes the notification information concerning the wireless terminals which has been selected as the target of the MU-MC communication, and the channel(s) which has been assigned to each of the selected wireless terminals. Therefore, it is possible to shorten a time period from the determination of the MU-MC communication until the start of the MU-MC communication, and to enhance an efficiency of the system. The more is the number of the wireless terminals to be selected, the more largely is this effect exhibited. In addition, the notification frame is transmitted through a predetermined specific channel, and accordingly, the wireless terminal does not need to stand by for the notification frame in all of the channels. Therefore, the power consumption of the wireless terminal can be reduced.

### (Second embodiment)

In the first embodiment, although it is assumed that the channels 1 to 8 are consecutively disposed within a predetermined frequency band, supplemental explanation for the consecutiveness of the channels is below given.

The channel numbers (i.e., channel Nos.) in the IEEE802.11 standard are provided at 5 MHz intervals, therefore, in the case of a channel width of 20 MHz, an interval between channel Nos. at which channels do not overlap is 4. In the present embodiment, consecutive channels in a channel set mean consecutive channels that do not overlap. The channel Nos. in the embodiment are for convenience, and ch.1 should be interpreted as channel No. 36 in the 5 GHz band in the IEEE802.11 standard and ch.2 should be interpreted as channel No. 40 in the 5 GHz band in the IEEE802.11 standard.

### [5 GHz band]

In the 5 GHz band of IEEE802.11 standard, since channel Nos. are basically used at 20 MHz intervals, there is no problem in using the channels based on the actually used channel Nos.

### [2.4 GHz band]

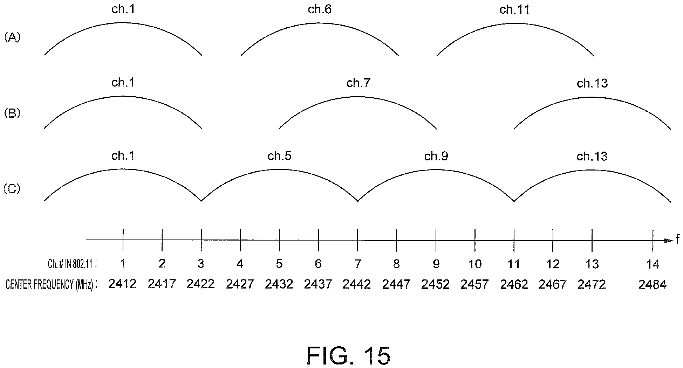

On the other hand, in the 2.4 GHz band, as illustrated in FIG. 15, reference channel selection is performed at 25 MHz intervals (FIG. 15(A)) in such as North America and China, and at 30 MHz intervals (FIG. 15(B)) in Europe. Therefore, it may be performed at 25 MHz intervals (FIG. 15(A)) mirroring the selection for North America and China where, for example, ch.1 in the embodiment may be set to channel No. 1 in the 2.4 GHz band in IEEE802.11 standard and ch.2 may be set to channel No. 6 in the 2.4 GHz band in IEEE802.11 standard. Alternatively, it may be performed at 30 MHz intervals (FIG. 15(B)) mirroring the selection for Europe where, for example, ch.1 in the embodiment is set to channel No. 1 in the 2.4 GHz band in the IEEE802.11 standard and ch.2 is set to channel No. 7 in the 2.4 GHz band in the IEEE802.11 standard. Alternatively, as illustrated in FIG. 15(C), mirroring the 20 MHz channel intervals in the 5 GHz band, ch.1 in the embodiment may be set to channel No. 1 in the 2.4 GHz band in IEEE802.11 standard and ch.2 may be set to channel No. 5 in the 2.4 GHz band in IEEE802.11 standard. FIG. 15(C) exemplifies a future possible channel selection other than the ones in FIG. 15(A) and FIG. 15(B). However, in the case of such as North America, China and Europe, when another wireless communication system selects, as at least part of the channels, channel No. 6 or 7 in the 2.4 GHz band, the frequency band partially overlaps with that of channel No. 5. In this case, a frequency band in which mutual wireless communication systems influence each other broadens, and channel utilization efficiency decreases.

### (Third embodiment)

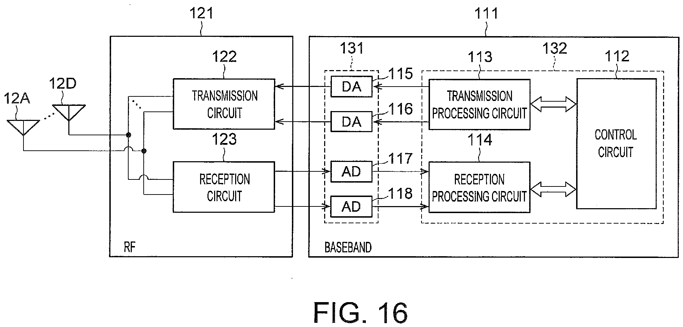

FIG. 16 shows a hardware configuration example of a wireless communication device installed in the access point according to a third embodiment. This configuration example is merely one example, and the present embodiment is not limited thereto. Since the basic operations thereof are the same as those of the wireless communication device shown in FIG. 11, the description will be focused on differences between the configurations, and redundant descriptions will be omitted.

This wireless communication device includes a baseband unit 111, a RF unit 121, and antennas 12A to 12D.

The baseband unit 111 includes a control circuit (protocol stack) 112, a transmission processing circuit 113, a reception processing circuit 114, DA conversion circuits 115 and 116, and AD conversion circuits 117 and 118. The RF unit 121 and the baseband unit 111 may be configured by one IC chip (Integrated Circuit).

The baseband unit 111 is, as one example, a baseband LSI or a baseband IC. Alternatively, as another example, the baseband unit 111 may include an IC 132 and an IC 131. At this point, the IC 132 may include the control circuit 112, the transmission processing circuit 113, and the reception processing circuit 114, and the IC 131 may include the DA conversion circuits 115 and 116, and the AD conversion circuits 117 and 118.

The control circuit 112 corresponds, as one example, to a communication controlling device for controlling communication, or a controller (or controlling circuitry) for controlling communication. At this point, the wireless communicator may include the transmission processing circuit 113 and the reception processing circuit 114. The wireless communicator may further include the DA conversion circuits 115 and 116, and the AD conversion circuits 117 and 118, in addition to the transmission processing circuit 113 and the reception processing circuit 114. The wireless communicator may even further include a transmission circuit 122 and a reception circuit 123, in addition to the transmission processing circuit 113, the reception processing circuit 114, the DA conversion circuits 115 and 116, and the AD conversion circuits 117 and 118. The integrated circuit according to the present embodiment may include a processor that performs all or a part of the process of the baseband unit 111, that is, all or a part of the processes of the control circuit 112, the transmission processing circuit 113, the reception processing circuit 114, the DA conversion circuits 115 and 116, and the AD conversion circuits 117 and 118.

Alternatively, the IC 132 may correspond to the communication controlling device for controlling communication. At this point, the wireless communicator may include the transmission circuit 122 and the reception circuit 123. The wireless communicator may further include the DA conversion circuits 115 and 116, and the AD conversion circuits 117 and 118, in addition to the transmission circuit 122 and the reception circuit 123.

The control circuit 112 in the baseband unit 111 includes the buffer 104 of FIG. 11, and performs processes in the MAC layer and the like. The control circuit 112 may include the clock generation unit. The transmission processing circuit 113 performs a desired process in the physical layer such as a modulation process or an addition of a physical header, and creates, for example, two kinds of digital baseband signals (hereafter, referred to as a digital I signal and a digital Q signal). In the case of the MIMO transmission, the two kinds of digital baseband signals are created for each stream. The DA conversion circuits 115 and 116 subject signals input from the transmission processing circuit 113 to the DA conversion. More specifically, the DA conversion circuit 115 converts the digital I signal into an analog I signal, and the DA conversion circuit 116 converts the digital Q signal into an analog Q signal. Note that the analog signals may be transmitted with a single-channel signal without the quadrature modulation. In this case, the number of the DA conversion circuits may be one. In addition, in the case where one or more channels of transmission signals are transmitted being distributed to a plurality of antennas, DA conversion circuits corresponding in number to the antennas may be provided.

The RF unit 121 is, as one example, an RF analog IC or an RF IC. The transmission circuit 122 in the RF unit 121 includes a transmission filter for extracting a signal in a desired band from the signal of the DA-converted frame, a mixer for upconverting the filtered signal into that of a radio frequency by making use of a signal of a certain frequency supplied from an oscillator, a preamplifier (PA) for amplifying the upconverted signal, and the like.

The reception circuit 123 in the RF unit 121 includes an LNA (Low Noise Amplifier) for amplifying the signals received by the antennas, a mixer for downconverting the amplified signals to the baseband by making use of a signal of a certain frequency supplied from an oscillator, a reception filter for extracting signals in a desired band from the downconverted signals, and the like. More specifically, the reception circuit 123 subjects the received signals that are subjected to low-noise amplification by a low noise amplifier (not shown) to quadrature demodulation with carriers the phase difference between which is 90° to create the I (In-phase) signal being in phase with the received signal, and a Q (Quad-phase) signal with a phase delayed by 90° from the I signal. These I signal and Q signal are adjusted in gain and output from the reception circuit 123.

The AD conversion circuits 117 and 118 in the baseband unit 111 perform AD conversion to the input signals from the reception circuit 123. More specifically, the AD conversion circuit 117 converts an I signal into a digital I signal, and the AD conversion circuit 118 converts a Q signal into a digital Q signal. Note that the analog signals may be received with a single-channel signal without the quadrature modulation. In this case, the number of the AD conversion circuits may be one. In addition, in the case where a plurality of antennas are provided, AD conversion circuits corresponding in number to the antennas may be provided. The reception processing circuit 114 processes the physical layer, processes a demodulation and the like. The control circuit 112 processes the MAC layer and the like to the demodulated frames. In addition, the control circuit 112 performs a process relating to the MIMO. For example, a process of channel estimation, a transmission weight calculation process, a separating process of streams, and the like are performed.

Note that a switch for switching the antennas 12A to 12D to any one of the transmission circuit 122 and the reception circuit 123 may be disposed in the RF unit. By the switching control, the antennas 12A to 12D are connected to the transmission circuit 122 in transmitting, and the antennas 12A to 12D are connected to the reception circuit 123 in receiving.

The detailed description of the process of the above-described components is obvious from the description of FIG. 11, and therefore redundant descriptions will be omitted.

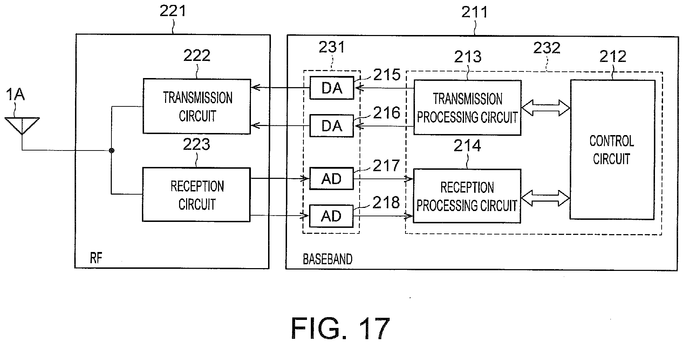

FIG. 17 shows a hardware configuration example of a wireless communication device installed in the wireless terminal according to the second embodiment. This configuration example is merely one example, and the present embodiment is not limited thereto. Since the basic operations thereof are the same as those of the wireless communication device shown in FIG. 12, the description will be focused on differences between the configurations, and redundant descriptions will be omitted.

This wireless communication device includes a baseband unit 211, an RF unit 221, and an antenna 1A. The RF unit 221 and the baseband unit 211 may be configured by one IC chip.

The baseband unit 211 includes a control circuit (protocol stack) 212, a transmission processing circuit 213, a reception processing circuit 214, DA conversion circuits 215 and 216, and AD conversion circuits 217 and 218.

The baseband unit 211 is, as one example, a baseband LSI or a baseband IC. Alternatively, as another example, the baseband unit 211 may include an IC 232 and an IC 231. At this point, the IC 232 may include the control circuit 212, the transmission processing circuit 213, and the reception processing circuit 214, and the IC 231 may include the DA conversion circuits 215 and 216, and the AD conversion circuits 217 and 218.

The control circuit 212 corresponds, as one example, to a communication controlling device for controlling communication, or a controller (or controlling circuitry) for controlling communication. At this point, the wireless communicator may include the transmission processing circuit 213 and the reception processing circuit 214. The wireless communicator may further include the DA conversion circuits 215 and 216, and the AD conversion circuits 217 and 218, in addition to the transmission processing circuit 213 and the reception processing circuit 214. The wireless communicator may even further include a transmission circuit 222 and a reception circuit 223, in addition to the transmission processing circuit 213, the reception processing circuit 214, the DA conversion circuits 215 and 216, and the AD conversion circuits 217 and 218. The integrated circuit according to the present embodiment may include a processor that performs all or a part of the processing in the baseband unit 211, that is, all or a part of the processing in the control circuit 212, the transmission processing circuit 213, the reception processing circuit 214, the DA conversion circuits 215 and 216, and the AD conversion circuits 217 and 218.

Alternatively, the IC 232 may correspond to the communication controlling device for controlling communication. At this point, the wireless communicator may include the transmission circuit 222 and the reception circuit 223. The wireless communicator may further include, in addition to the transmission circuit 222 and the reception circuit 223, the DA conversion circuits 215 and 216, and the AD conversion circuits 217 and 218.

The control circuit 212 in the baseband unit 211 includes the buffer 204 of FIG. 12, and performs processes in the MAC layer and the like. The control circuit 212 may include the clock generation unit. The transmission processing circuit 213 performs a desired process in the physical layer such as a modulation process or an addition of a physical header, and creates, for example, two kinds of digital baseband signals (hereafter, referred to as a digital I signal and a digital Q signal). In the case of the MIMO transmission, the two kind of digital baseband signals are created for each stream. The DA conversion circuits 215 and 216 subject signals input from the transmission processing circuit 213 to the DA conversion. More specifically, the DA conversion circuit 215 converts the digital I signal into an analog I signal, the DA conversion circuit 216 converts the digital Q signal into an analog Q signal. Note that the analog signals may be transmitted with a single-channel signal without the quadrature modulation. In this case, the number of DA conversion circuits may be one. In addition, in the case where one or more channels of transmission signals are transmitted being distributed to a plurality of antennas, DA conversion circuits corresponding in number to the antennas may be provided.

The RF unit 221 is, as one example, an RF analog IC or an RF IC. The transmission circuit 222 in the RF unit 221 includes a transmission filter for extracting a signal in a desired band from the signal of the DA-converted frame, a mixer for upconverting the filtered signal into that of a radio frequency by making use of a signal of a certain frequency supplied from an oscillator, a preamplifier (PA) for amplifying the upconverted signal, and the like.

The reception circuit 223 includes an LNA (Low Noise Amplifier) for amplifying the signal received by the antenna, a mixer for downconverting the amplified signal into that of a baseband by making use of a signal of a certain frequency supplied from an oscillator, a reception filter for extracting a signal in a desired band from the downconverted signal, and the like. More specifically, the reception circuit 223 subjects the received signals that is subjected to low-noise amplification by a low noise amplifier (not shown) to quadrature demodulation with carriers the phase difference between which is 90° to create the I (In-phase) signal being in phase with the received signal and the Q (Quad-phase) signal with a phase delayed by 90° from the I signal. These I signal and Q signal are adjusted in gain and output from the reception circuit 223.

The AD conversion circuits 217 and 218 in the baseband unit 211 perform AD conversion to the input signal from the reception circuit 223. Although two systems of AD conversion circuit here, which perform parallel processing, are provided here, the number of the AD conversion circuits may be one. More specifically, the AD conversion circuit 117 converts an I signal into a digital I signal, and the AD conversion circuit 118 converts the Q signal into a digital Q signal. Note that the analog signals may be received with a single-channel signal without the quadrature modulation. In this case, the number of the AD conversion circuits may be one. In addition, in the case where a plurality of antennas are provided, AD conversion circuits corresponding in number to the antennas may be provided. The reception processing circuit 214 performs a process in the physical layer, a demodulation process, and the like. The control circuit 212 performs processes in the MAC layer and the like to the demodulated frame. The reception processing circuit 214 may perform digital filter processing on a channel in use as a part of the process in the physical layer.

Alternatively, in the case where the wireless terminal includes a plurality of antennas to support MIMO, the control circuit 212 also performs a process relating to MIMO. For example, a process of channel estimation, a transmission weight calculation process, a separate process of streams, and the like are performed.

Note that a switch for switching the antenna 1A to any one of the transmission circuit 222 and the reception circuit 223 may be disposed in the RF unit 221. By the switching control, the antenna 1A is connected to the transmission circuit 222 when transmitting, and the antenna 1A is connected to the reception circuit 223 when receiving.

The detailed description of the process of the above-described components is obvious from the description of FIG. 12, and therefore redundant descriptions will be omitted.

### (Fourth embodiment)

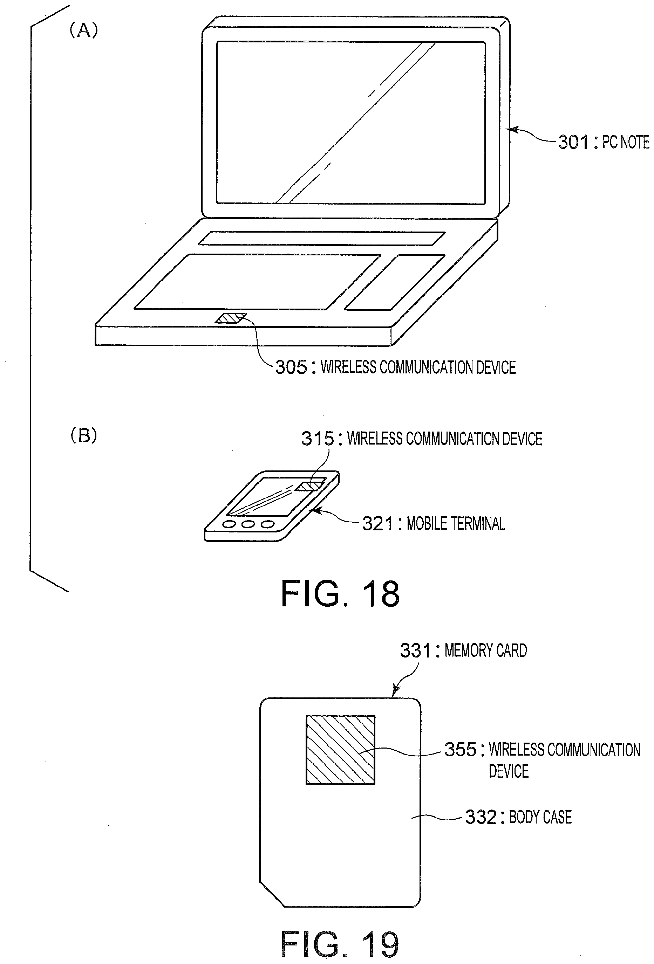

FIG. 18(A) and FIG. 18(B) are perspective views of wireless terminal according to the third embodiment. The wireless terminal in FIG. 18(A) is a notebook PC 301 and the wireless communication device in FIG. 18(B) is a mobile terminal 321. The notebook PC 301 and the mobile terminal 321 are equipped with wireless communication devices 305 and 315 respectively. For the wireless communication devices 305 and 315, it is possible to use the wireless communication device provided in a wireless terminal, an access point which have been described above or both of them. The wireless terminal equipped with the wireless communication device is not limited to the notebook PC and the mobile terminal. For example, it can be provided in a TV, a digital camera, a wearable device, a tablet, a smart phone, a gaming device, a network storage device, a monitor, a digital audio player, a web camera, a video camera, a projector, a navigation system, an external adapter, an internal adapter, a set top box, a gateway, a printer server, a mobile access point, a router, an enterprise/service provider access point, a portable device, a handheld device and so on.

Moreover, a wireless communication device installed in a terminal or an access point can also be installed in a memory card.

FIG. 19 illustrates an example of mounting the wireless communication device on the memory card. A memory card 331 includes a wireless communication device 355 and a body case 332. The memory card 331 uses the wireless communication device 355 for wireless communication with an external device (a wireless terminal, an access point or both of them, etc.). Here, in FIG. 19, the description of other elements (for example, a memory, and so on) in the memory card 331 is omitted.

### (Fifth Embodiment)

In the fifth embodiment, a bus, a processor unit and an external interface unit are provided in addition to the configuration of the wireless communication device (wireless communication device of the access point, the wireless communication device of the wireless terminal or both of them) according to any of the first to fourth embodiments. The processor unit and the external interface unit are connected with a buffer through the bus. Firmware operates in the processor unit. Thus, by adopting a configuration in which the firmware is included in the wireless communication device, it becomes possible to easily change the function of the wireless communication device by rewriting the firmware. The processing unit in which the firmware operates may be a processor that performs the process of the communication controlling device or the controller according to the present embodiment, or may be another processor that performs a process relating to extending or altering the functions of the process of the communication controlling device or the controller. The processing unit in which the firmware operates may be included in the access point or the wireless terminal according to the present embodiment. Alternatively, the processing unit may be included in the integrated circuit of the wireless communication device installed in the access point, or in the integrated circuit of the wireless communication device installed in the wireless terminal.

### (Sixth Embodiment)

In the sixth embodiment, a clock generating unit is provided in addition to the configuration of the wireless communication device (wireless communication device of the access point, the wireless communication device of the wireless terminal or both of them) according to any of the first to fourth embodiments. The clock generating unit generates a clock and outputs the clock from an output terminal to the external of the wireless communication device. Thus, by outputting the clock generated in the wireless communication device to the external and operating the host side by means of the clock output to the external, it becomes possible to operate the host side and the wireless communication device side in a synchronized manner.

### (Seventh Embodiment)

In the seventh embodiment, a power source unit, a power source controlling unit and a wireless power feeding unit are included in addition to the configuration of the wireless communication device (wireless communication device of the access point, the wireless communication device of the wireless terminal or both of them) according to any of the first to fourth embodiments. The power supply controlling unit is connected with the power source unit and the wireless power feeding unit, and performs control to select a power source supplied to the wireless communication device. Thus, by adopting a configuration in which the power source is included in the wireless communication device, power consumption reduction operations that control the power source become possible.

### (Eighth Embodiment)

In the eighth embodiment, a SIM card is included in addition to the configuration of the wireless communication device according to the seventh embodiment. For example, the SIM card is connected may be connected to the transmitter, the receiver, the controller, or a plurality of elements of them in the wireless communication device. Thus, by adopting a configuration in which the SIM card is included in the wireless communication device, it becomes possible to easily perform authentication processing.

### (Ninth Embodiment)

In the ninth embodiment, a video image compressing/decompressing unit is included in addition to the configuration of the wireless communication device according to the fifth embodiment. The video image compressing/decompressing unit is connected with a bus. Thus, by adopting a configuration in which the video image compressing/decompressing unit is included in the wireless communication device, it becomes possible to easily transmit a compressed video image and decompress a compressed video image received.

### (Tenth Embodiment)

In the tenth embodiment, an LED unit is included in addition to the configuration of the wireless communication device (wireless communication device of the access point, the wireless communication device of the wireless terminal or both of them) according to any of the first to fourth embodiments. For example, the LED unit is connected with may be connected to the transmitter, the receiver, the controller, or a plurality of elements of them in the wireless communication device. Thus, by adopting a configuration in which the LED unit is included in the wireless communication device, it becomes possible to easily notify the operation state of the wireless communication device to the user.

### (Eleventh Embodiment)

In the eleventh embodiment, a vibrator unit is included in addition to the configuration of the wireless communication device (wireless communication device of the access point, the wireless communication device of the wireless terminal or both of them) according to any of the first to fourth embodiments. For example, the vibrator unit is connected may be connected to the transmitter, the receiver, the controller, or a plurality of elements of them in the wireless communication device. Thus, by adopting a configuration in which the vibrator unit is included in the wireless communication device, it becomes possible to easily notify the operation state of the wireless communication device to the user.

### (Twelfth embodiment)

In the twelfth embodiment, the configuration of the wireless communication device includes a display in addition to the configuration of the wireless communication device (wireless communication device of the access point, the wireless communication device of the wireless terminal) according to any one of the first to fourth embodiments. The display may be connected to the controller (101 or 201) of the wireless communication device via a bus (not shown). As seen from the above, the configuration including the display to display the operation state of the wireless communication device on the display allows the operation status of the wireless communication device to be easily notified to a user.

### (Thirteenth Embodiment)

In the present embodiment, [1] the frame type in the wireless communication system, [2] a technique of disconnection between wireless communication devices, [3] an access scheme of a wireless LAN system and [4] a frame interval of a wireless LAN are described.

### [1] Frame type in communication system

Generally, as mentioned above, frames treated on a wireless access protocol in a wireless communication system are roughly divided into three types of the data frame, the management frame and the control frame. These types are normally shown in a header part which is commonly provided to frames. As a display method of the frame type, three types may be distinguished in one field or may be distinguished by a combination of two fields. In the IEEE 802.11 standard, identification of a frame type is made based on two fields of Type and Subtype in the Frame Control field in the header part of the MAC frame. The Type field is one for generally identifying a data frame, a management frame or a control frame and the Subtype filed is one for identifying more detailed type in the identified-by-the Type frame type such as a Beacon frame belonging the management frame.

The management frame is a frame used to manage a physical communication link with a different wireless communication device. For example, there are a frame used to perform communication setting with the different wireless communication device or a frame to release communication link (that is, to disconnect the connection), and a frame related to the power save operation in the wireless communication device.

The data frame is a frame to transmit data generated in the wireless communication device to the different wireless communication device after a physical communication link with the different wireless communication device is established. The data is generated in a higher layer of the present embodiment and generated by, for example, a user's operation.

The control frame is a frame used to perform control at the time of transmission and reception (exchange) of the data frame with the different wireless communication device. A response frame transmitted for the acknowledgment in a case where the wireless communication device receives the data frame or the management frame, belongs to the control frame. The response frame is, for example, an ACK frame or a BlockACK frame. The RTS frame and the CTS frame are also the control frame.

These three types of frames are subjected to processing based on the necessity in the physical layer and then transmitted as physical packets via an antenna. In IEEE 802.11 standard (including the extended standard such as IEEE Std 802.11ac-2013), an association process is defined as one procedure for connection establishment. The association request frame and the association response frame which are used in the procedure are a management frame. Since the association request frame and the association response frame is the management frame transmitted in a unicast scheme, the frames causes the wireless communication terminal in the receiving side to transmit an ACK frame being a response frame. The ACK frame is a control frame as described in the above.

### [2] Technique of disconnection between wireless communication devices

For disconnection (release), there are an explicit technique and an implicit technique. As the explicit technique, a frame to disconnect any one of the connected wireless communication devices is transmitted. This frame corresponds to Deauthentication frame defined in IEEE 802.11 standard and is classified into the management frame. The frame for disconnection may be referred to as "release frame" by the meaning of releasing connection, for example. Normally, it is determined that the connection is disconnected at the timing of transmitting the release frame in a wireless communication device on the side to transmit the release frame and at the timing of receiving the release frame in a wireless communication device on the side to receive the release frame. Afterward, it returns to the initial state in a communication phase, for example, a state to search for a wireless communication device of the communicating partner. In a case that the wireless communication base station disconnects with a wireless communication terminal, for example, the base station deletes information on the wireless communication device from a connection management table if the base station holds the connection management table for managing wireless communication terminals which entries into the BSS of the base station-self. For example, in a case that the base station assigns an AID to each wireless communication terminal which entries into the BSS at the time when the base station permitted each wireless communication terminal to connect to the base station-self in the association process, the base station deletes the held information related to the AID of the wireless communication terminal disconnected with the base station and may release the AID to assign it to another wireless communication device which newly entries into the BSS.

On the other hand, as the implicit technique, it is determined that the connection state is disconnected in a case where frame transmission (transmission of a data frame and management frame or transmission of a response frame with respect to a frame transmitted by the subject device) is not detected from a wireless communication device of the connection partner which has established the connection for a certain period. Such a technique is provided because, in a state where it is determined that the connection is disconnected as mentioned above, a state is considered where the physical wireless link cannot be secured, for example, the communication distance to the wireless communication device of the connection destination is separated and the radio signals cannot be received or decoded. That is, it is because the reception of the release frame cannot be expected.

As a specific example to determine the disconnection of connection in an implicit method, a timer is used. For example, at the time of transmitting a data frame that requests an acknowledgment response frame, a first timer (for example, a retransmission timer for a data frame) that limits the retransmission period of the frame is activated, and, if the acknowledgement response frame to the frame is not received until the expiration of the first timer (that is, until a desired retransmission period passes), retransmission is performed. When the acknowledgment response frame to the frame is received, the first timer is stopped.

On the other hand, when the acknowledgment response frame is not received and the first timer expires, for example, a management frame to confirm whether a wireless communication device of a connection partner is still present (in a communication range) (in other words, whether a wireless link is secured) is transmitted, and, at the same time, a second timer (for example, a retransmission timer for the management frame) to limit the retransmission period of the frame is activated. Similarly to the first timer, even in the second timer, retransmission is performed if an acknowledgment response frame to the frame is not received until the second timer expires, and it is determined that the connection is disconnected when the second timer expires.

Alternatively, a third timer is activated when a frame is received from a wireless communication device of the connection partner, the third timer is stopped every time the frame is newly received from the wireless communication device of the connection partner, and it is activated from the initial value again. When the third timer expires, similarly to the above, a management frame to confirm whether the wireless communication device of the connection party is still present (in a communication range) (in other words, whether a wireless link is secured) is transmitted, and, at the same time, a second timer (for example, a retransmission timer for the management frame) to limit the retransmission period of the frame is activated. Even in this case, retransmission is performed if an acknowledgment response frame to the frame is not received until the second timer expires, and it is determined that the connection is disconnected when the second timer expires. The latter management frame to confirm whether the wireless communication device of the connection partner is still present may differ from the management frame in the former case. Moreover, regarding the timer to limit the retransmission of the management frame in the latter case, although the same one as that in the former case is used as the second timer, a different timer may be used.

### [3] Access scheme of wireless LAN system

For example, there is a wireless LAN system with an assumption of communication or competition with a plurality of wireless communication devices. CSMA/CA is set as the basis of an access scheme in the IEEE802.11 (including an extension standard or the like) wireless LAN. In a scheme in which transmission by a certain wireless communication device is detected and transmission is performed after a fixed time from the transmission end, simultaneous transmission is performed in the plurality of wireless communication devices that detect the transmission by the wireless communication device, and, as a result, radio signals collide and frame transmission fails. By detecting the transmission by the certain wireless communication device and waiting for a random time from the transmission end, transmission by the plurality of wireless communication devices that detect the transmission by the wireless communication device stochastically disperses. Therefore, if the number of wireless communication devices in which the earliest time in a random time is subtracted is one, frame transmission by the wireless communication device succeeds and it is possible to prevent frame collision. Since the acquisition of the transmission right based on the random value becomes impartial between the plurality of wireless communication devices, it can say that a scheme adopting Carrier Avoidance is a suitable scheme to share a radio medium between the plurality of wireless communication devices.

### [4] Frame interval of wireless LAN

The frame interval of the IEEE802.11 wireless LAN is described. There are six types of frame intervals used in the IEEE802.11 wireless LAN, such as distributed coordination function interframe space (DIFS), arbitration interframe space (AIFS), point coordination function interframe space (PIFS), short interframe space (SIFS), extended interframe space (EIFS) and reduced interframe space (RIFS).

The definition of the frame interval is defined as a continuous period that should confirm and open the carrier sensing idle before transmission in the IEEE802.11 wireless LAN, and a strict period from a previous frame is not discussed. Therefore, the definition is followed in the explanation of the IEEE802.11 wireless LAN system. In the IEEE802.11 wireless LAN, a waiting time at the time of random access based on CSMA/CA is assumed to be the sum of a fixed time and a random time, and it can say that such a definition is made to clarify the fixed time.

DIFS and AIFS are frame intervals used when trying the frame exchange start in a contention period that competes with other wireless communication devices on the basis of CSMA/CA. DIFS is used in a case where the right of priority according to the traffic type is not distinguished, AIFS is used in a case where the right of priority by traffic identifier (TID) is provided.

Since operation is similar between DIFS and AIFS, AIFS is chiefly used to give an explanation below. In the IEEE802.11 wireless LAN, access control including the start of frame exchange in the MAC layer is performed. In addition, in a case where QoS (Quality of Service) is supported when data is transferred from a higher layer, the traffic type is notified together with the data, and the data is classified for the priority at the time of access on the basis of the traffic type. The class at the time of this access is referred to as "access category (AC)". Therefore, the value of AIFS is provided every access category.

PIFS denotes a frame interval to enable access which is more preferential than other competing wireless communication devices, and the period is shorter than the values of DIFS and AIFS. SIFS denotes a frame interval which can be used in a case where frame exchange continues in a burst manner at the time of transmission of a control frame of a response system or after the access right is acquired once. EIFS denotes a frame interval caused when frame reception fails (when the received frame is determined to be error).

RIFS denotes a frame interval which can be used in a case where a plurality of frames are consecutively transmitted to the same wireless communication device in a burst manner after the access right is acquired once, and a response frame from a wireless communication device of the transmission partner is not requested while RIFS is used.

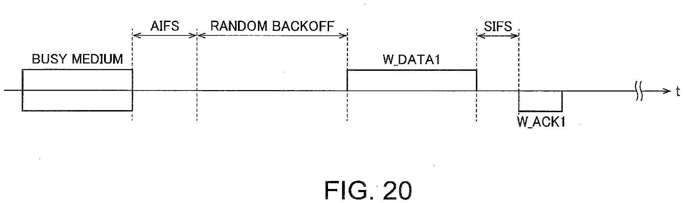

Here, FIG. 20 illustrates one example of frame exchange in a competitive period based on the random access in the IEEE802.11 wireless LAN.

When a transmission request of a data frame (W_DATA1) is generated in a certain wireless communication device, a case is assumed where it is recognized that a medium is busy (busy medium) as a result of carrier sensing. In this case, AIFS of a fixed time is set from the time point at which the carrier sensing becomes idle, and, when a random time (random backoff) is set afterward, data frame W_DATA1 is transmitted to the communicating partner.

The random time is acquired by multiplying a slot time by a pseudorandom integer led from uniform distribution between contention windows (CW) given by integers from 0. Here, what multiplies CW by the slot time is referred to as "CW time width". The initial value of CW is given by CWmin, and the value of CW is increased up to CWmax every retransmission. Similarly to AIFS, both CWmin and CWmax have values every access category. In a wireless communication device of transmission destination of W_DATA1, when reception of the data frame succeeds, a response frame (W_ACK1) is transmitted after SIFS from the reception end time point. If it is within a transmission burst time limit when W_ACK1 is received, the wireless communication device that transmits W_DATA1 can transmit the next frame (for example, W_DATA2) after SIFS.

Although AIFS, DIFS, PIFS and EIFS are functions between SIFS and the slot-time, SIFS and the slot time are defined every physical layer. Moreover, although parameters to which the value of each access category such as AIGS, CWmin and CWmax is set can be set every communication group (which is a basic service set (BSS) in the IEEE802.11 wireless LAN), the default values are defined.

For example, in the definition of 802.11ac, with an assumption that SIFS is 16 µs and the slot time is 9 µs, and thereby PIFS is 25 µs, DIFS is 34 µs, the default value of the frame interval of an access category of BACKGROUND (AC_BK) in AIFS is 79 µs, the default value of the frame interval of BEST EFFORT (AC_BE) is 43 µs, the default value of the frame interval between VIDEO(AC_VI) and VOICE(AC_VO) is 34 µs, and the default values of CWmin and CWmax are 31 and 1023 in AC_BK and AC_BE, 15 and 31 in AC_VI and 7 and 15 in AC_VO. Here, EIFS denotes the sum of SIFS, DIFS, and the time length of a response frame transmitted at the lowest mandatory physical rate. In the wireless communication device which can effectively takes EIFS, it may estimate an occupation time length of a PHY packet conveying a response frame directed to a PHY packet due to which the EIFS is caused and calculates a sum of SIFS, DIFS and the estimated time to take the EIFS.

Note that the frames described in the embodiments may indicate not only things called frames in, for example, the IEEE 802.11 standard, but also things called packets. In the case where the base station transmits a plurality of frames, the frames may be the same (for example, the same type or the same content) or may be different. Generally, when it is expressed that the base station transmits or receives a plurality of frames or a plurality of X-th frames, the frames or the X-th frames may be the same (for example, the same type or the same content) or may be different. An arbitrary value can be put into X according to the situation.

The terms used in each embodiment should be interpreted broadly. For example, the term "processor" may encompass a general purpose processor, a central processing unit (CPU), a microprocessor, a digital signal processor (DSP), a controller, a microcontroller, a state machine, and so on. According to circumstances, a "processor" may refer to an application specific integrated circuit (ASIC), a field programmable gate array (FPGA), and a programmable logic device (PLD), etc. The term "processor" may refer to a combination of processing devices such as a plurality of microprocessors, a combination of a DSP and a microprocessor, one or more microprocessors in conjunction with a DSP core.

As another example, the term "memory" may encompass any electronic component which can store electronic information. The "memory" may refer to various types of media such as random access memory (RAM), read-only memory (ROM), programmable read-only memory (PROM), erasable programmable read only memory (EPROM), electrically erasable PROM (EEPROM), non-volatile random access memory (NVRAM), flash memory, magnetic or optical data storage, which are readable by a processor. It can be said that the memory electronically communicates with a processor if the processor read and/or write information for the memory. The memory may be integrated to a processor and also in this case, it can be said that the memory electronically communication with the processor.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the inventions. The accompanying claims are intended to cover such forms or modifications as would fall within the scope of the inventions.

### [explanation of sings]

11: access point
12a, 12b, 12c and 12d: antenna
1, 2, 3 and 4: wireless terminal
21, 22, 23 to 24: beam
51, 61, 71 and 81: notification frame
101 and 201 controller
102 and 202 : receiver
103 and 203: transmitter
104 and 204: buffer
111 and 211 baseband unit
121 and 221: rf unit
122 and 222: transmission circuit
123 and 223: reception circuit
112 and 212: control circuit
113 and 213: transmission processing circuit
114 and 214: reception processing circuit
115, 116, 215 and 216: DA conversion circuit
117, 118, 217 and 218: AD conversion circuit
301: PC note
305, 315 and 355: wireless communication device
321: mobile terminal
331: memory card
332: body case

## Claims

1. A wireless communication device (11) comprising:
a transmitter (102) configured to transmit a first frame (51) including first information, the first information including information to designate a plurality of wireless communication devices (1, 2, 3, 4) and including information concerning frequency resources which have been assigned to the plurality of wireless communication devices for frequency multiplexing communication; and
a receiver (103) configured to receive second frames from the plurality of wireless communication devices via the frequency resources assigned to the plurality of wireless communication devices, in the frequency multiplexing communication
wherein the first frame has a first field to store information to be commonly notified to the plurality of wireless communication devices and a plurality of second fields to store information individually notified to the plurality of wireless communication devices,
the first information are stored in at least one of the first field and the second field,
the first information further includes information to designate access categories of data to be transmitted in the frequency multiplexing communication by the plurality of wireless communication devices, and the information to designate the access categories are stored in the second fields of the first frame, respectively.

2. The wireless communication device according to claim 1, wherein
the information concerning the frequency resources includes information on a number of frequency resources assigned to each of the plurality of wireless communication devices, and
the first information further includes information to designate a rank order of the plurality of wireless communication devices.

3. The wireless communication device according to claim 2, wherein
the information concerning the frequency resources includes information to identify the frequency resources assigned to the plurality of wireless communication devices, the frequency resources having a predetermined rank order.

4. The wireless communication device according to any one of claims 1 to 3, wherein
the first information includes information to instruct the plurality of wireless communication devices to transmit the second frames through the respective assigned communication resources, after elapsing of a predetermined first time period from reception of the first frame.

5. The wireless communication device according to any one of claims 1 to 4, wherein
the first information includes information to specify a condition of a size or a time length of the second frames.

6. The wireless communication device according to any one of claims 1 to 5, further comprising at least one antenna.

7. A wireless communication device (1), comprising:
a receiver (202) configured to receive a first frame (51) including first information from another communication device (11), the first information including information to designate a plurality of wireless communication devices (1, 2, 3, 4) and information concerning frequency resources which have been assigned to the plurality of wireless communication devices for frequency multiplexing communication;
controlling circuitry (201) configured to control, when its own device is designated in the first frame, to perform the frequency multiplexing communication using the communication resource assigned to its own device; and
a transmitter (202) configured to transmit a second frame to the other communication device via the communication resource assigned to its own device in the frequency multiplexing communication,
wherein the first frame has a first field to store information to be commonly notified to the plurality of wireless communication devices and a plurality of second fields to store information individually notified to the plurality of wireless communication devices,
the first information are stored in at least one of the first field and the second field,
the first information includes category information to designate access categories of data to be transmitted by the wireless communication devices, and the information to designate the access categories are stored in the second fields respectively, and
the transmitter transmits the second frame including data that belongs to the access category designated to its own device.

8. The wireless communication device according to claim 7, wherein
the information concerning the frequency resources includes number information representing a number of frequency resources assigned to its own device,
the first information further includes order information to designate a rank order of the plurality of wireless communication devices, and
the controlling circuitry is configured to identify the frequency resource assigned to its own device from among the plurality of frequency resources based on the number information and a rank of its own device specified by the order information.

9. The wireless communication device according to any one of claims 7 to 8, wherein
the first information includes instruction information of transmitting the second frame after elapsing of a predetermined first time period from completion of reception of the first frame, and
a transmitter is configured to transmit the second frame through the communication resource assigned to its own device, according to the instruction information.

10. The wireless communication device according to any one of claims 8 to 9, wherein
the first information includes condition information to specify a condition on a size or a time length of the second frames transmitted through the frequency resources assigned to the plurality of wireless communication devices, and
the transmitter is configured to transmit the second frame having a size or a time length based on the condition specified by the condition information.

11. The wireless communication device according to any one of claims 8 to 10, further comprising at least one antenna.

12. A wireless communication method performed by a wireless communication device (11) comprising:
transmitting a first frame (51) including first information, the first information including information to designate a plurality of wireless communication devices (1, 2, 3, 4) and including information concerning frequency resources which have been assigned to the plurality of wireless communication devices for frequency multiplexing communication; and
receiving second frames from the plurality of wireless communication devices via the frequency resources assigned to the plurality of wireless communication devices, in the frequency multiplexing communication
wherein the first frame has a first field to store information to be commonly notified to the plurality of wireless communication devices and a plurality of second fields to store information individually notified to the plurality of wireless communication devices,
the first information are stored in at least one of the first field and the second field,
the first information further includes information to designate access categories of data to be transmitted in the frequency multiplexing communication by the plurality of wireless communication devices, and the information to designate the access categories are stored in the second fields of the first frame, respectively.

## Patentansprüche

1. Drahtlose Kommunikationsvorrichtung (11) mit:
einem Transmitter (102), der ausgestaltet ist, um ein erstes Frame (51) mit erster Information, wobei die erste Information Information zum Bezeichnen einer Mehrzahl drahtloser Kommunikationsvorrichtungen (1,2,3,4) und Information bezüglich Frequenzressourcen, die der Mehrzahl drahtloser Kommunikationsvorrichtungen zur Frequenz-Multiplex-Kommunikation zugewiesen sind, enthält, zu übertragen und
einem Receiver (103), der ausgestaltet ist, um bei der Frequenz-Multiplex-Kommunikation zweite Frames von der Mehrzahl drahtloser Kommunikationsvorrichtungen über die Frequenzressourcen zu empfangen, die der Mehrzahl drahtlosen Kommunikationsvorrichtungen zugewiesen sind;
wobei das erste Frame ein erstes Feld zum Speichern von Information, die gemeinsam der Mehrzahl drahtloser Kommunikationsvorrichtungen mitgeteilt wird, und eine Mehrzahl zweiter Felder zum Speichern von Information, die individuell der Mehrzahl drahtloser Kommunikationsvorrichtungen mitgeteilt wird, hat;
wobei die erste Information in zumindest einem von dem ersten Feld und dem zweiten Feld gespeichert ist;
wobei die erste Information des Weiteren Information zum Bezeichnen von Datenzugriffskategorien, die in der Frequenz-Multiplex-Kommunikation durch die Mehrzahl drahtloser Kommunikationsvorrichtungen zu übertragen sind, enthält und wobei Information zum Bestimmen der Zugriffskategorien in den zweiten Feldern des ersten Frames jeweils gespeichert sind.

2. Drahtlose Kommunikationsvorrichtung nach Anspruch 1, bei der die Information bezüglich der Frequenzressourcen Information bezüglich der Zahl der Frequenzressourcen umfasst, die jeder der Mehrzahl drahtloser Kommunikationsvorrichtungen zugeordnet sind; und
wobei die erste Information des Weiteren Information enthält, um eine Rangordnung der Mehrzahl drahtloser Kommunikationsvorrichtungen zu bestimmen.

3. Drahtlose Kommunikationsvorrichtung nach Anspruch 2, bei der
die Information bezüglich der Frequenzressourcen Information zum Identifizieren der Frequenzressourcen umfasst, die der Mehrzahl drahtloser Kommunikationsvorrichtungen zugeordnet sind, wobei die Frequenzressourcen eine vorgegebene Rangordnung haben.

4. Drahtlose Kommunikationsvorrichtung nach einem der Ansprüche 1 bis 3, bei der
die erste Information Information zum Anweisen der Mehrzahl drahtloser Kommunikationsvorrichtungen zum Übertragen der zweiten Frames über die jeweiligen zugeordneten Kommunikationsressourcen nach dem Ablauf einer vorgegebenen ersten Zeitspanne von dem Empfang ersten Frames umfasst.

5. Drahtlose Kommunikationsvorrichtung nach einem der Ansprüche 1 bis 4, bei der
die erste Information Information zum Bestimmen einer Bedingung, einer Größe oder einer Zeitlänge der zweiten Frames enthält.

6. Drahtlose Kommunikationsvorrichtung nach einem der Ansprüche 1 bis 5, des Weiteren mit zumindest einer Antenne.

7. Drahtlose Kommunikationsvorrichtung (1) mit:
einem Receiver (202), der ausgestaltet ist, um ein erstes Frame (51) mit erster Information von einer weiteren Kommunikationsvorrichtung (11) zu empfangen, wobei die erste Information Information zum Bestimmen einer Mehrzahl drahtloser Kommunikationsvorrichtungen (1,2,3,4) und Information bezüglich Frequenzressourcen, die der Mehrzahl der drahtlosen Kommunikationsvorrichtungen für Frequenz-Multiplex-Kommunikation zugeordnet sind, enthält;
einer Steuerschaltung (201), die ausgestaltet ist, um, wenn die eigene Vorrichtung in dem ersten Frame bestimmt ist, die Frequenz-Multiplex-Kommunikation unter Verwendung der Kommunikationsressource durchzuführen, die der eigenen Vorrichtung zugeordnet ist; und
einem Transmitter (202), der ausgestaltet ist, um bei der Frequenz-Multiplex-Kommunikation ein zweites Frame an die weitere Kommunikationsvorrichtung über die Kommunikationsressource zu übertragen, die der eigenen Vorrichtung zugewiesen ist;
wobei das erste Frame ein erstes Feld hat, um Information, die gemeinsam an die Mehrzahl der drahtlosen Kommunikationsvorrichtungen mitgeteilt wird, zu speichern, und eine Mehrzahl zweiter Felder, um Information, die individuell der Mehrzahl der drahtlosen Kommunikationsvorrichtungen mitgeteilt wird, zu speichern;
wobei die erste Information zumindest in einem des ersten Feldes und des zweiten Feldes gespeichert ist;
wobei die erste Information Kategorieinformation zum Bestimmen von Datenzugriffskategorien enthält, die durch die drahtlose Kommunikationsvorrichtungen zu übertragen sind, und wobei die Information zum Bestimmen der Zugriffskategorien jeweils in den zweiten Feldern gespeichert ist; und
wobei der Transmitter das zweite Frame mit Daten überträgt, die zu der Zugriffskategorie gehören, die durch die eigene Vorrichtung bestimmt ist.

8. Drahtlose Kommunikationsvorrichtung nach Anspruch 7 bei der die Information bezüglich der Frequenzressourcen eine Zahlformation enthält, die eine Zahl der Frequenzressourcen enthält, die der eigenen Vorrichtung zugeordnet ist;
wobei die erste Information des Weiteren Ordnungsinformation zum Bestimmen einer Rangordnung der Mehrzahl von drahtlosen Kommunikationsvorrichtungen enthält;
wobei die Steuerschaltung ausgestaltet ist, um die Frequenzressource, die der eigenen Vorrichtung zugeordnet ist, aus der Mehrzahl von Frequenzressourcen beruhend auf der Zahlinformation und dem Rang der eigenen Vorrichtung zu bestimmen, die durch die Ordnungsinformation festgelegt ist.

9. Drahtlose Kommunikationsvorrichtung nach einem der Ansprüche 7 bis 8, bei der
die erste Information Anweisungsinformation zum Übertragen des zweiten Frames nach Ablauf einer vorgegebenen ersten Zeitspanne von dem Vervollständigen des Empfangs des ersten Frames umfasst, und
wobei ein Transmitter ausgestaltet ist, um das zweite Frame über die Kommunikationsressource zu übertragen, die der eigenen Vorrichtung zugeordnet ist, entsprechend der Anweisungsinformation.

10. Drahtlose Kommunikationsvorrichtung nach einem der Ansprüche 8 bis 9, bei der
die erste Information Bedingungsinformation enthält, um eine Bedingung bezüglich einer Größe oder Zeitlänge der zweiten Frames zu bestimmen, die über die Frequenzressourcen übertragen werden, welche der Mehrzahl von drahtlosen Kommunikationsvorrichtungen zugeordnet sind, und
wobei der Transmitter ausgestaltet ist, um das zweite Frame mit einer Größe oder einer Zeitlänge beruhend auf der Bedingung zu übertragen, die durch die Bedingungsinformation bestimmt ist.

11. Drahtlose Kommunikationsvorrichtung nach einem der Ansprüche 8 bis 10, des Weiteren mit zumindest einer Antenne.

12. Drahtloses Kommunikationsverfahren, welches durch eine drahtlose Kommunikationsvorrichtung (11) ausgeführt wird, mit:
Übertragen eines ersten Frames (51) mit erster Information, wobei die erste Information Information zum Bestimmen einer Mehrzahl von drahtlosen Kommunikationsvorrichtungen (1,2,3,4) und Information bezüglich Frequenzressourcen, die der Mehrzahl von drahtlosen Kommunikationsvorrichtungen zur Frequenz-Multiplex-Kommunikation zugeordnet sind, enthält; und
Empfangen bei der Frequenz-Multiplex-Kommunikation von zweiten Frames von der Mehrzahl drahtloser Kommunikationsvorrichtungen über die Frequenzressourcen, die der Mehrzahl von drahtlosen Kommunikationsvorrichtungen in zugeordnet sind, wobei das erste Frame ein erstes Feld zum Speichern von Information, die gemeinsam der Mehrzahl von drahtlosen Kommunikationsvorrichtungen mitgeteilt wird, und eine Mehrzahl von zweiten Feldern zum Speichern von Information hat, die individuell Mehrzahl von drahtlosen Kommunikationsvorrichtungen mitgeteilt wird,
wobei die erste Information zumindest in einem des ersten Feldes und des zweiten Feldes gespeichert wird;
wobei die erste Information des Weiteren Information zum Bestimmen von Datenzugriffskategorien enthält, die in der Frequenz-Multiplex-Kommunikation durch die Mehrzahl von drahtlosen Kommunikationsvorrichtungen zu übertragen sind, und wobei die Information zum Bestimmen der Zugriffskategorien jeweils in den zweiten Feldern des ersten Frames gespeichert sind.

## Revendications

1. Dispositif de communication sans fil (11) comprenant :
un émetteur (102) configuré pour transmettre une première trame (51) comprenant des premières informations, les premières informations comprenant des informations destinées à désigner une pluralité de dispositifs de communication sans fil (1, 2, 3, 4) et comprenant des informations concernant les ressources de fréquence qui ont été allouées à la pluralité de dispositifs de communication sans fil pour une communication par multiplexage en fréquence ; et
un récepteur (103) configuré pour recevoir des secondes trames de la part de la pluralité de dispositifs de communication sans fil via les ressources de fréquence allouées à la pluralité de dispositifs de communication sans fil, pendant la communication par multiplexage de fréquence,
dans lequel la première trame possède un premier champ destiné à stocker des informations à indiquer de manière commune à la pluralité de dispositifs de communication sans fil et une pluralité de seconds champs destinés à stocker des informations indiquées individuellement à la pluralité de dispositifs de communication sans fil,
les premières informations sont stockées dans au moins l'un du premier champ et du second champ,
les premières informations comprennent en outre des informations destinées à désigner des catégories d'accès de données à transmettre pendant la communication par multiplexage de fréquence par la pluralité de dispositifs de communication sans fil, et les informations destinées à désigner les catégories d'accès sont stockées dans les seconds champs de la première trame, respectivement.

2. Dispositif de communication sans fil selon la revendication 1, dans lequel
les informations concernant les ressources de fréquence comprennent des informations sur un nombre de ressources de fréquence allouées à chacun de la pluralité de dispositifs de communication sans fil, et
les premières informations comprennent en outre des informations destinées à désigner un ordre de classement de la pluralité de dispositifs de communication sans fil.

3. Dispositif de communication sans fil selon la revendication 2, dans lequel
les informations concernant les ressources de fréquence comprennent des informations destinées à identifier les ressources de fréquence allouées à la pluralité de dispositifs de communication sans fil, les ressources de fréquence ayant un ordre de classement prédéterminé.

4. Dispositif de communication sans fil selon l'une quelconque des revendications 1 à 3, dans lequel
les premières informations comprennent des informations destinées à demander à la pluralité de dispositifs de communication sans fil de transmettre les secondes trames par le biais des ressources de communication allouées respectives, au bout d'une première période de temps prédéterminée à compter de la réception de la première trame.

5. Dispositif de communication sans fil selon l'une quelconque des revendications 1 à 4, dans lequel
les premières informations comprennent des informations destinées à spécifier une condition d'une taille ou d'une durée des secondes trames.

6. Dispositif de communication sans fil selon l'une quelconque des revendications 1 à 5, comprenant en outre au moins une antenne.

7. Dispositif de communication sans fil (1), comprenant :
un récepteur (202) configuré pour recevoir une première trame (51) comprenant des premières informations de la part d'un autre dispositif de communication (11), les premières informations comprenant des informations destinées à désigner une pluralité de dispositifs de communication sans fil (1, 2, 3, 4) et des informations concernant les ressources de fréquence qui ont été allouées à la pluralité de dispositifs de communication sans fil pour une communication par multiplexage de fréquence ;
un circuit de commande (201) configuré pour exécuter une commande, lorsque son propre dispositif est désigné dans la première trame, destinée à effectuer la communication par multiplexage de fréquence à l'aide de la ressource de communication allouée à son propre dispositif ; et
un émetteur (202) configuré pour transmettre une seconde trame à l'autre dispositif de communication via la ressource de communication allouée à son propre dispositif pendant la communication par multiplexage de fréquence,
dans lequel la première trame possède un premier champ destiné à stocker des informations à indiquer de manière commune à la pluralité de dispositifs de communication sans fil et une pluralité de seconds champs destinés à stocker des informations indiquées individuellement à la pluralité de dispositifs de communication sans fil,
les premières informations sont stockées dans au moins l'un du premier champ et du second champ,
les premières informations comprennent des informations de catégorie destinées à désigner des catégories d'accès de données à transmettre par les dispositifs de communication sans fil, et les informations destinées à désigner les catégories d'accès sont stockées dans les seconds champs, respectivement, et
l'émetteur transmet la seconde trame comprenant des données qui appartiennent à la catégorie d'accès désignée à son propre dispositif.

8. Dispositif de communication sans fil selon la revendication 7, dans lequel les informations concernant les ressources de fréquence comprennent des informations de nombre représentant un nombre de ressources de fréquence allouées à son propre dispositif,
les premières informations comprennent en outre des informations d'ordre destinées à désigner un ordre de classement de la pluralité de dispositifs de communication sans fil, et
le circuit de commande est configuré pour identifier la ressource de fréquence allouée à son propre dispositif parmi la pluralité de ressources de fréquence sur la base des informations de nombre et d'un classement de son propre dispositif spécifié par les informations d'ordre.

9. Dispositif de communication sans fil selon l'une quelconque des revendications 7 à 8, dans lequel
les premières informations comprennent des informations d'instructions de transmission de la seconde trame au bout d'une première période de temps prédéterminée à compter de la réception de la première trame, et
un émetteur est configuré pour transmettre la seconde trame par le biais de la ressource de communication allouée à son propre dispositif, selon les informations d'instructions.

10. Dispositif de communication sans fil selon l'une quelconque des revendications 8 à 9, dans lequel
les premières informations comprennent des informations de condition destinées à spécifier une condition sur une taille ou une durée des secondes trames transmises par le biais des ressources de fréquence allouées à la pluralité de dispositifs de communication sans fil, et
l'émetteur est configuré pour transmettre la seconde trame ayant une taille ou une durée sur la base de la condition spécifiée par les informations de condition.

11. Dispositif de communication sans fil selon l'une quelconque des revendications 8 à 10, comprenant en outre au moins une antenne.

12. Procédé de communication sans fil exécuté par un dispositif de communication sans fil (11) comprenant :
la transmission d'une première trame (51) comprenant des premières informations, les premières informations comprenant des informations destinées à désigner une pluralité de dispositifs de communication sans fil (1, 2, 3, 4) et comprenant des informations concernant des ressources de fréquence qui ont été allouées à la pluralité de dispositifs de communication sans fil pour une communication par multiplexage de fréquence ; et
la réception de secondes trames de la part de la pluralité de dispositifs de communication sans fil via les ressources de fréquence allouées à la pluralité de dispositifs de communication sans fil, pendant la communication par multiplexage de fréquence,
dans lequel la première trame possède un premier champ destiné à stocker des informations à indiquer de manière commune à la pluralité de dispositifs de communication sans fil et une pluralité de seconds champs destinés à stocker des informations indiquées individuellement à la pluralité de dispositifs de communication sans fil,
les premières informations sont stockées dans au moins l'un du premier champ et du second champ,
les premières informations comprennent en outre des informations destinées à désigner des catégories d'accès de données à transmettre pendant la communication par multiplexage de fréquence par la pluralité de dispositifs de communication sans fil, et les informations destinées à désigner les catégories d'accès sont stockées dans les seconds champs de la première trame, respectivement.
